# EUROPÄISCHE PATENTSCHRIFT

(11) **EP 0 934 972 B1**
(45) Veröffentlichungstag und Bekanntmachung des Hinweises auf die Patenterteilung: **28.04.2004**
(21) Anmeldenummer: 99101426.7
(22) Anmeldetag: 27.01.1999
(51) Int. Cl.: C08K 5/00, C08L 23/02

(54) **Polyolefin-Formmasse zur Herstellung von kalandrierten Folien/Platten**
Polyolefin moulding matters for manufacture of calandered foils/boards
Matières de moulage polyoléfiniques pour la production de feuilles /plaques calandrées

(30) Priorität: 07.02.1998 DE 19804910
(43) Veröffentlichungstag der Anmeldung: 11.08.1999
(73) Patentinhaber: Clariant GmbH, 65929 Frankfurt am Main (DE)
(72) Erfinder: Wick, Christian, 86405 Meitingen (DE); Pfahler, Gerhard, Dr., 82223 Eichenau (DE); Lichtblau, Alexander, Dr., 86154 Augsburg (DE)

(56) Entgegenhaltungen:
- EP-A- 0 341 925
- EP-A- 0 565 184
- EP-A- 0 601 745
- EP-A- 0 709 426
- EP-B- 0 530 984
- WO-A-97/09376
- WO-A-98/51690
- DE-A- 4 028 407
- DE-A- 19 537 140
- US-A- 5 246 777

## Beschreibung

Die Erfindung bezieht sich auf eine Polyolefin-Formmasse zur Herstellung von kalandrierten Folien/Platten, welche an den heißen Metalloberflächen der Verarbeitungsmaschinen im äußerst geringem Maße klebt und während des Verarbeitungsprozesses von den heißen Walzen nicht abtropft.

Es ist seit langem bekannt, daß sich durch das Verfahren des Kalandrierens besonders PVC-Hart- und PVC-Weich-Mischungen zu technisch hochwertigen Folienbahnen verarbeiten lassen. Eine besondere Schwierigkeit bei dieser Technik besteht im Falle von Polyolefinen in der Beherrschung der Klebneigung der heißen Polymerschmelze an den Metalloberflächen der Kalanderwalzen. Zu diesem Zweck wurden zahlreiche Rezepturen entwickelt, in denen durch Zusatz geeigneter Gleitund Trennmittel diese Klebeeigenschaften unter Kontrolle gehalten werden. In DE-A-3 628 322 werden beispielsweise Mischungen verschiedener Polyolefine vorgeschlagen, insbesondere Niederdruckpolyethylen, PVA (Polyvinylacetat), EVA (Ethylenvinylacetat), EAA (Ethylacrylsäure), um die Verarbeitungsstabilität zu erhöhen. In EP-A-0 607 783 werden zur Lösung des Verarbeitungsproblems Mischungen aus HDPE mit sehr niedrigem MFR (Schmelzflußindex) und linearem LDPE niedriger Dichte sowie einem mineralischem Füllstoff beschrieben.

Auch die Gleitwirkung von grenzflächenaktiven Substanzen, wie sie z.B. als Antistatika für PVC-Mischungen eingesetzt werden, läßt sich zur Reduzierung der Klebeneigung der Polymerschmelze an den heißen Metalloberflächen der Verarbeitungsmaschinen nutzen. Wie in DE-A-2 823 507 beschrieben, können Metallsulphonate als Trennmittel zur Verringerung der Klebeneigung eingesetzt werden.

Auf Kalanderanlagen zu Folienbahnen verarbeitbare, plastifizierte Polymermassen müssen generell über einen breiten Erweichungsbereich und eine ausreichend hohe Viskosität bei den entsprechenden Verarbeitungstemperaturen und Scherbedingungen verfügen.

PVC-Mischungen besitzen diese notwendigen hohen Schmelzviskositäten. Hochpolymere wie z.B. Polypropylen und Polyethylen, besitzen jedoch nur niedrige Schmelzviskositäten. Während die Schmelzenfestigkeit einer PVC-Formmasse bis zum Festkleben an den Walzen und darüberhinaus bis zum Erreichen der Endstabilität relativ unverändert bleibt, nimmt die Viskosität einer Polypropylen-Formmasse bis zum Erreichen der klebfreien Zeit und vor allem bei weiterer Versuchsfortführung sehr stark ab und erschwert damit die Verarbeitung auf Kalanderanlagen beträchtlich.

Aus technologischen und wirtschaftlichen Gründen (z.B. Einsatz eines Materials mit geringerer Dichte oder aus einem unpolaren Kunststoff) besteht seit längerer Zeit der Wunsch, derartige Kalanderfolien nicht nur auf Basis von PVC, sondern auch auf Basis von Polyolefinen, wie z.B. Homo- und Copolymeren des Ethylens oder des Propylens, herzustellen. Dies war bisher dadurch erschwert, daß handelsübliche Polyolefin-Massen beim Kalandrieren schon nach sehr kurzer Laufzeit auf den Metallwalzen festkleben und sehr dünnflüssig werden, wobei sich Folien mit völlig unzureichenden physikalischen Eigenschaften ergeben oder die Polymermasse sogar von den Kalanderwalzen abtropft.

Auch die Anwendung der beim Kalandrieren von PVC üblichen Technik, Gleitmittel, die in ihrer Polarität dem Kunststoff angepaßt werden, zuzusetzen, führte bei Polyolefinen nicht zu dem gewünschten Ergebnis. Um eine verbesserte Verarbeitungsstabilität zu erreichen, wird der Einsatz von Stabilisatoren in DE-A-4 028 407 beschrieben, Mischungen aus Phosphiten oder Thiocostabilisatoren und Phenolen erlauben eine etwas erleichterte Verarbeitung der Polyolefinformmasse.

Es wurde nun überraschend gefunden, daß man die geschilderten Nachteile umgehen und die in DE-A-4 028 407 beschriebene Verarbeitungsstabilität erheblich verbessern kann, wenn für die Folienherstellung durch Kalandrieren von Polyolefinen Formmassen benutzt werden, denen spezifische, an sich als Stabilisatoren bekannte Chemikalien zugesetzt werden.

Die Erfindung betrifft somit ein Verfahren gemäß den Ansprüchen 1-6.

Die Additive setzen sich zusammen aus:
A) 1-48 Gew.% mindestens einer Komponente aus der Gruppe von Phosphor oder Schwefel enthaltenden, Peroxid zersetzenden Verbindungen der Formeln (1) bis (5)

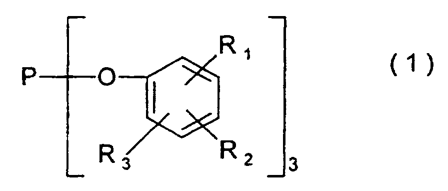

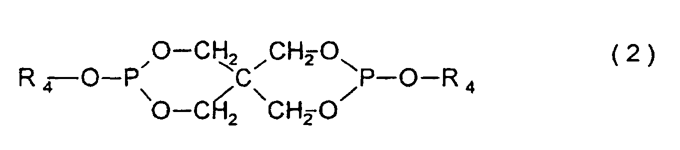

   R⁵-(Sₓ)-R⁵ (3)

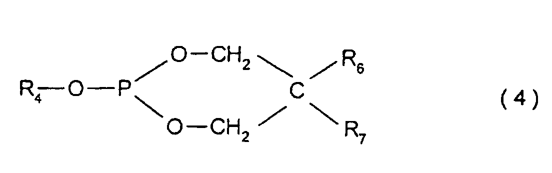

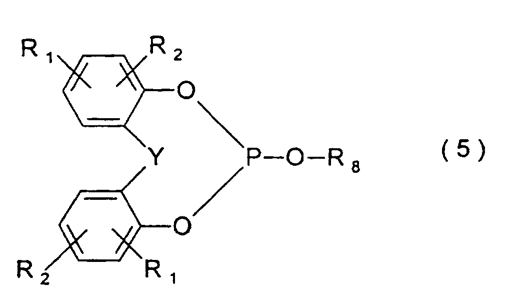

   worin
   - R¹, R² und R³: gleich oder verschieden sind und ein Wasserstoffatom, eine Methylgruppe, eine t-Butylgruppe, eine 1,1-Dimethylpropylgruppe, eine Cyclohexylgruppe oder einen Phenylrest bedeuten, der gegebenenfalls mit R¹ bis R³ nach obiger Definition unter Ausschluß eines weiteren Phenylrests substituiert ist,
   - R⁴: eine C₈-C₂₂-Alkylgruppe oder einen Rest der Formel (6) 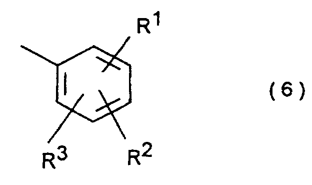 bedeutet,
   worin R¹ bis R³ die vorgenannte Bedeutung haben oder 2-Phenyl-2,2-dimethylethylgruppen sein können,
   - R⁵: eine C₈-C₂₀-Alkylgruppe bedeutet und x eine ganze Zahl von 1 bis 5 ist oder R⁵ C₈-C₂₀-O(O)C-CH₂-CH₂- bedeuten kann ,
   - R⁶ und R⁷: gleich oder verschieden sein können und ein Wasserstoffatom, eine Methylgruppe, eine Ethylgruppe, eine n-Butylgruppe, eine t-Butylgruppe oder eine Propylgruppe bedeuten können,
   - R⁸: ein Halogenatom, eine verzweigte oder unverzweigte C₁-C₁₀-Alkylgruppe, eine trivalente Gruppe der Formel

   N-(-CH₂-CH₂-)₃-

   sein kann, bei der jede Valenz mit Formel (5) belegt ist, so daß sich die Struktur N-[CH₂-CH₂-O-P-Rest von Formel (5)]₃ ergibt;
   - Y: eine direkte Bindung, eine Methylen-Gruppe oder eine mit Alkyl substituierte Alkylenbrücke mit insgesamt 4 C-Atomen bedeutet;
   eine Verbindung der Formel (7) 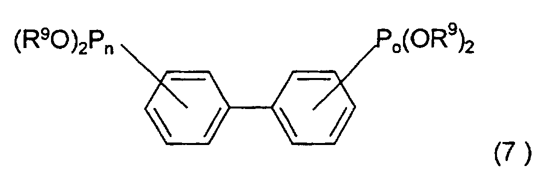 wobei die Summe aus n und o 1 oder 2 ergeben kann und R⁹ ein Rest der Formel (6) ist,
   und
B) 1-48 Gew.% mindestens einer Komponente aus der Gruppe von phenolischen Antioxidantien, bestehend aus 3,3-Bis-(3'-tert-butyl-4'-hydroxyphenyl)-buttersäureglykolester, Tetrakismethylen-(3,5-di-tert.-butyl-4-hydroxyzinamat)methan, Octadecyl-3,5-di-tert.-butyl-4-hydroxyzinamat, 1,3,5-Trimethyl-2,4,6-tris(3,5-di-tert.-butyl-4-hydroxybenzyl)benzol, 1,3,5-Tris(3,5-ditert.-butyl-4-hydroxybenzyl)isocyanurat, 2,4,6- Tris(3,5-di-tert.-butyl-4-hydroxybenzyl)isocyanurat, 1,1,3-Tris(2'-methyl-4'-hydroxy-5'-tert.butylphenyl)butan, 3,9-Bis[1,1-dimethyl-2-(di-tert.butyl-4-hydroxy-5-methylphenyl)propionyloxy)ethyl]-2,4,8,10-tetraoxospiro[5.5]undecan, α-Tocopherol einschließlich seiner Isomerenmischung und der Formel (8) 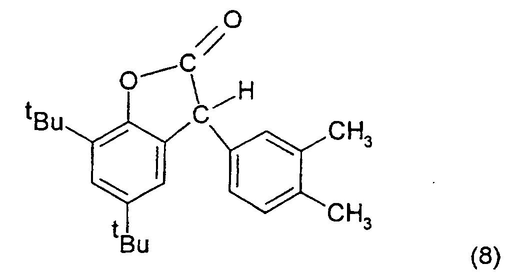 und
C) 4-98 Gew.% mindestens einer Komponente aus der Gruppe der sterisch gehinderten Amine der nachfolgend aufgeführten Namen oder Formeln, bestehend aus der Verbindung (9) 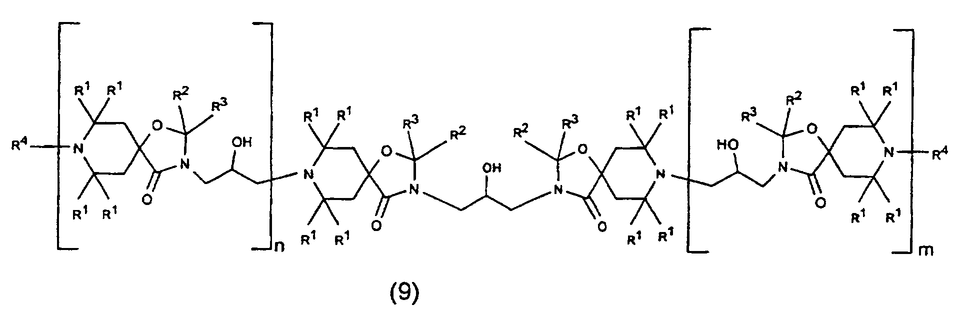 worin
   - n und m: unabhängig voneinander eine Zahl von 0 bis 100, wobei n und m nicht gleichzeitig 0 sein können,
   - R¹: Wasserstoff oder eine C₁-C₁₂-Alkylgruppe,
   - R² und R³: unabhängig voneinander ein Wasserstoffatom, eine C₁-C₁₈-Alkylgruppe oder zusammen mit dem sie verbindenden C-Atom einen Ring der Ringgröße 5 bis 13, oder zusammen mit dem sie bindenden C-Atom eine Gruppe der Formel (10), 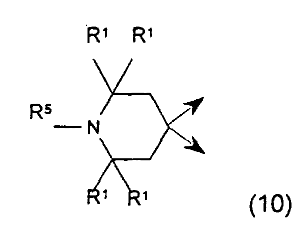
   wobei
   - R⁴ in Formel (5) und R⁵ in Formel (10): unabhängig voneinander entweder Wasserstoff oder eine C₁-C₂₂-Alkylgruppe, ein Sauerstoffradikal O*, -OH, -NO, -CH₂CN, Benzyl, Allyl, eine C₁-C₃₀--Alkyloxygruppe, eine C₅-C₁₂-Cycloalkyloxygruppe, eine C₆-C₁₀-Aryloxygruppe, wobei der Arylrest zusätzlich noch substituiert sein kann; eine C₇-C₂₀-Arylalkyloxygruppe, wobei der Arylrest zusätzlich noch substituiert sein kann, eine C₃-C₁₀-Alkenylgruppe, eine C₃-C₆-Alkinylgruppe, eine C₁-C₁₀-Acylgruppe, Halogen, unsubstituiertes oder am Phenylring durch C₁-C₄-Alkyl substituiertes C₇-C₉-Phenylalkyl;
   der Verbindung (11) 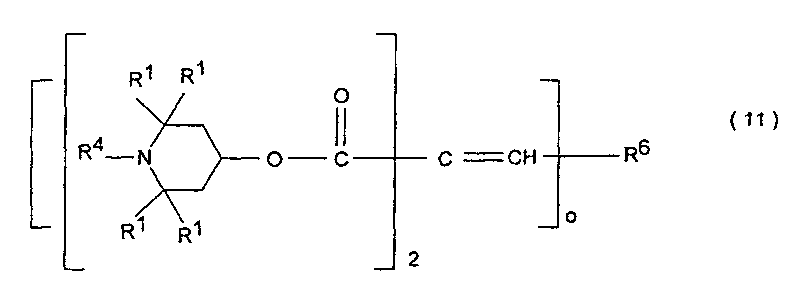 worin
   - R¹ und R⁴: die bei Formel (9) angeführten Bedeutungen haben,
   - R⁶: einen gegebenenfalls substituierten aromatischen Rest und
   - o: 1 oder 2 bedeuten;
   der Verbindung (12) 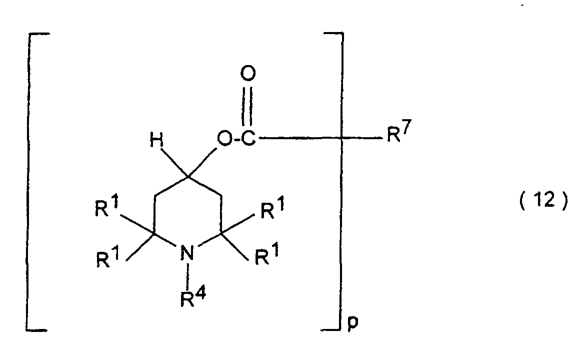 worin R¹ und R⁴ die bei Formel (9) angeführten Bedeutungen haben,
   - R⁷: C₁-C₁₈-Alkylen, C₂-C₁₈-Oxaalkylen, C₂-C₁₈-Thiaalkylen, C₂-C₁₈-Azaalkylen oder C₂-C₈-Alkenylen ist; ein C₁-C₁₈- n-valenter aliphatischer Rest; R³ ist als C₁-C₁₈-Alkylen verzweigtes oder insbesondere geradkettiges Alkylen,
   - p: die Zahlen 1 bis 10 bedeutet;
   den Verbindungen
   5,11-Bis-(2,2,6,6-tetramethyl-4-piperidinyl)-3,5,7,9,11,13-hexaaza-tetracyclo-[7.4.0.0^{2,7}.1^{3,13}]-tetradecan-8,14-dion; 2,2,4,4-Tetramethyl-20-(oxiranylmethyl)-7-oxa-3,20-diaza- dispiro[5.1.11.2]heneicosan-21-on;
   2,2,4,4-Tetramethyl-7-oxa-21-oxo-3,20-diaza-d ispiro-[5.1.11.2]-heneicosan-3-propansäure-dodecylester und 2,2,4,4-Tetramethyl-7-oxa-21-oxo-3,20-diazadispiro-[5.1.11.2]-heneicosan-3-propansäure-tetradecylester;
   mindestens einer Komponente der Formel (13) und (14) 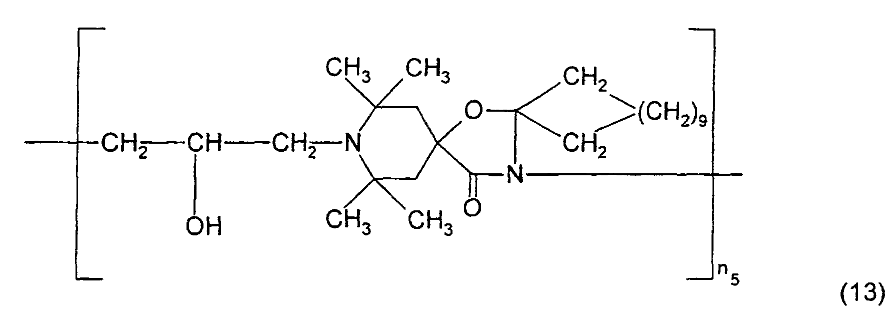 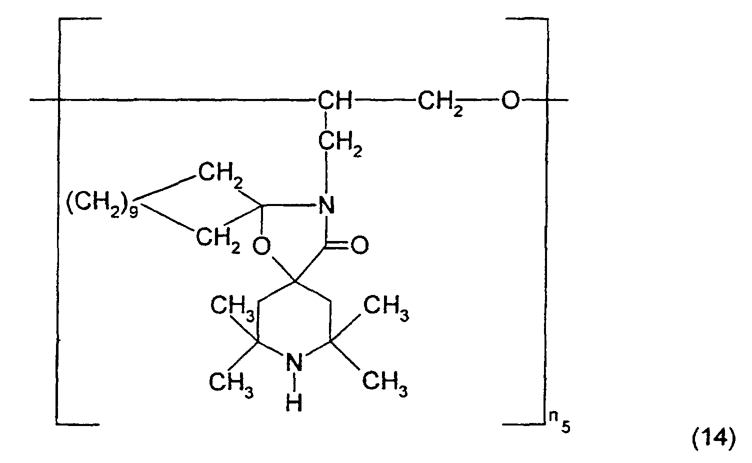 worin n₅ unabhängig voneinander eine ganze Zahl von 2-30 sind;
   dem Umsetzungsprodukt U1 aus Epichlorhydrin und 2,2,4,4-Tetramethyl-20-(oxiranylmethyl)-7-oxa-3,20-diaza-dispiro[5.1.11.2]heneicosan-21-on;
   einer Mischung M, enthaltend die vorstehend beschriebene Verbindung (9) zu einem Anteil von 60-95 Gew.-%, die Verbindung (15) zu einem Anteil von 4-30 Gew.-%, und die Verbindung (16) zu einem Anteil von 1-10 Gew.-%, 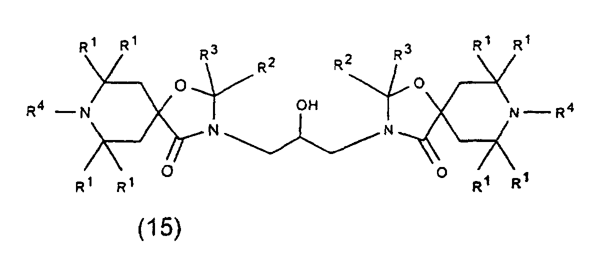 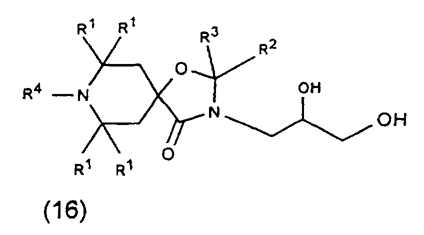 worin die Substituenten die bei Verbindung (9) genannte Bedeutung haben,
   einer Verbindung U2, die ein Kondensationsprodukt aus 1-Hydroxyethyl-2,2,6,6-tetramethyl-4-hydroxypiperidin und Bernsteinsäure darstellt;
   einem Produkt U3 erhältlich durch Umsetzung eines durch Reaktion eines Polyamins der Formel U3a mit Cyanursäurechlorid erhaltenen Produktes mit einer Verbindung der Formel U3b,

   H₂N―(CH₂)_{n_{5'}}―NH―(CH₂)_{n_{5"}}―NH―(CH₂)_{n_{5'''}}―NH₂ (U3a)

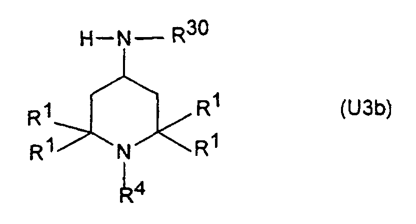

   wobei
   - R¹ und R⁴: die bei Formel (9) angegebenen Bedeutungen haben,
   - n_{5'}, n_{5"} und n_{5'''}: unabhängig voneinander eine Zahl von 2 bis 12 ist,
   - R³⁰: Wasserstoff, C₁-C₁₂-Alkyl, C₅-C₁₂-Cycloalkyl, Phenyl oder C₇-C₉-Phenylalkyl ist; wobei U3 eine Verbindung der Formel U3-1, U3-2, U3-3 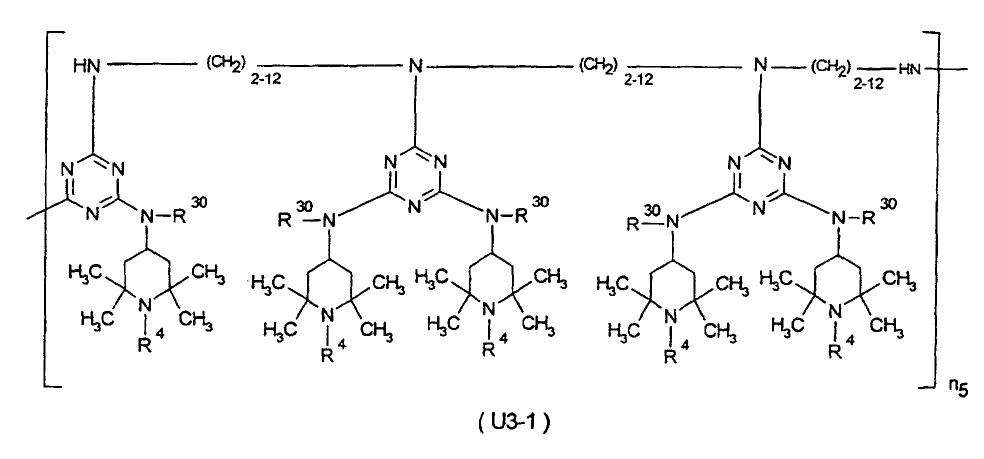 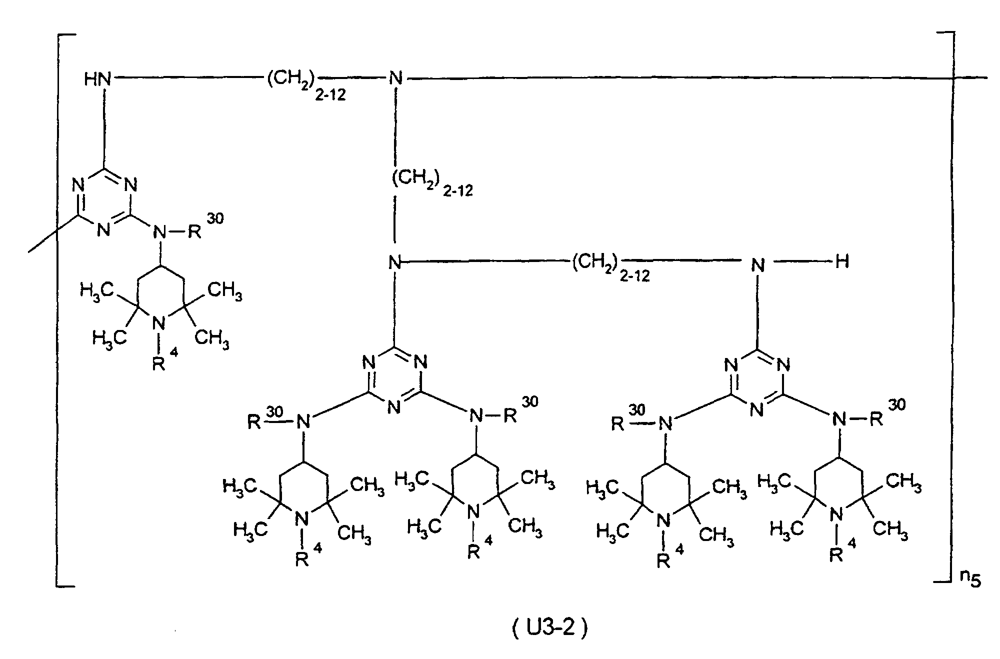 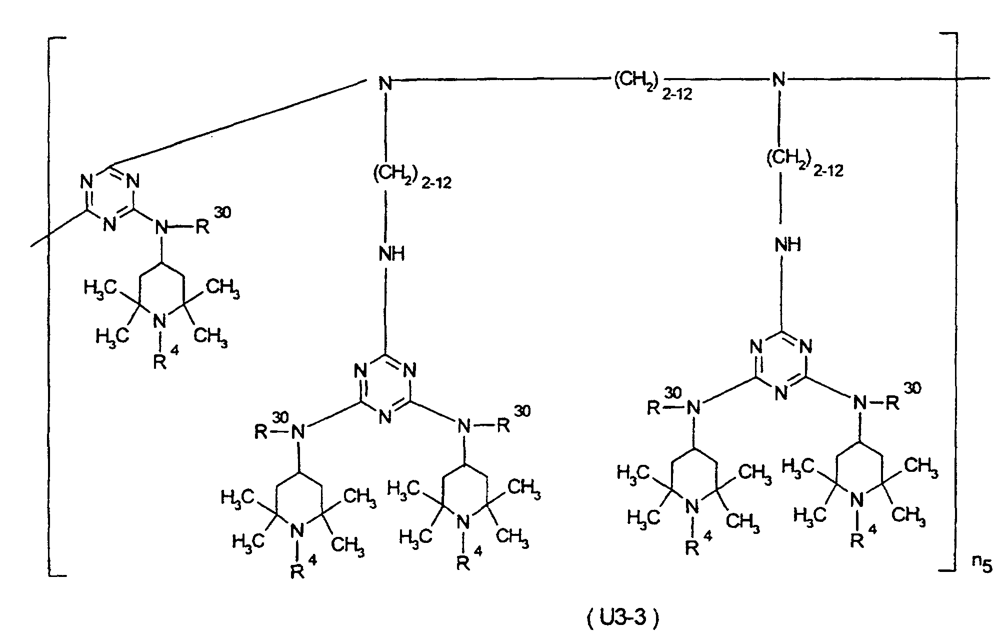
   oder ein Gemisch daraus darstellt, worin
   - n₅: 1 bis 20,
   - R⁴ und R³⁰: die bei Verbindung (9) bzw. bei Verbindung U3b angegebene Bedeutung haben;
   einer Verbindung (17) 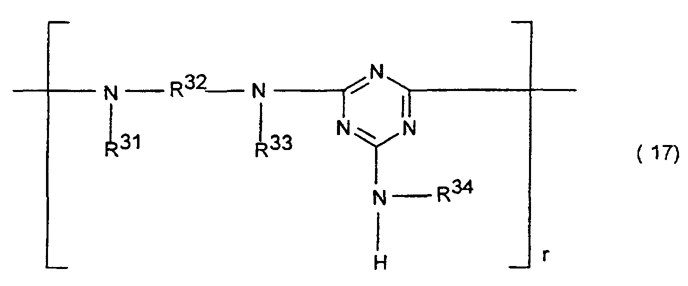 wobei
   - r: eine Zahl von 2 bis 50 darstellt,
   - R³¹, R³³ und R³⁴: unabhängig voneinander Wasserstoff, C₁-C₁₂-Alkyl, C₅-C₁₂-Cycloalkyl, durch C₁-C₄-Alkyl substituiertes C₅-C₁₂-Cycloalkyl, Phenyl, durch -OH und/oder C₁-C₁₀-Alkyl substituiertes Phenyl, C₇-C₉-Phenylalkyl, am Phenylrest durch -OH und/oder C₁-C₁₀-Alkyl substituiertes C₇-C₉-Phenylalkyl oder eine Gruppe der Formel 17a bedeuten, 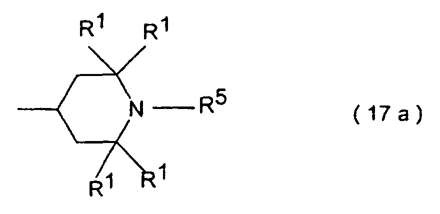
   wobei
   - R¹ und R⁵: die in Verbindung (9) bzw. Verbindung (10) angegebenen Bedeutungen haben, und
   - R³¹ und R³³: zusätzlich unabhängig voneinander Wasserstoff darstellen,
   R³² C₂-C₁₈-Alkylen, C₅-C₇-Cycloalkylen oder C₁-C₄-Alkylendi(C₅-C₇-Cyloalkylen) ist oder die Reste R³¹, R³² und R³³ mit den Stickstoffatomen, an die sie gebunden sind, einen 5- bis 10-gliedrigen heterocyclischen Ring bilden, und wobei mindestens einer der Reste R³¹, R³³ und R³⁴ eine Gruppe der Formel 17a darstellt;
   einer Verbindung (18) 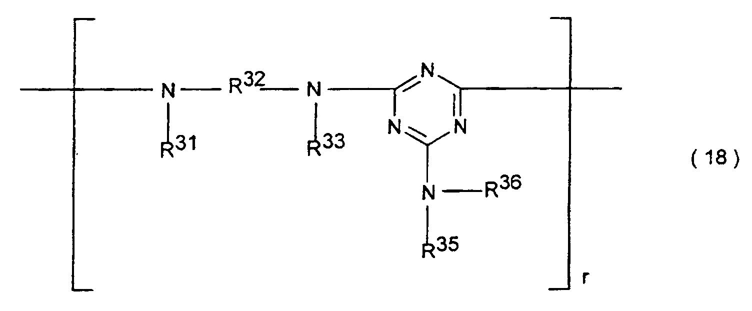 worin
   - R³¹, R³² , R³³ und r: die oben angegebenen Bedeutungen haben,
   - R³⁵ und R³⁶: unabhängig voneinander die Definition von R³⁴ haben kann, oder R³⁵ und R³⁶ zusammen mit dem Stickstoffatom, an das sie gebunden sind, einen 5- bis 10-gliedrigen heterozyklischen Ring bilden, wobei dieser zusätzlich zum Stickstoff-Heteroatom noch ein oder mehrere Heteroatome, vorzugsweise ein Sauerstoffatom, enthalten kann und mindestens einer der Reste R³¹, R³³, R³⁵ und/oder R³⁶ eine Gruppe der Formel (17a) darstellt;
   einer Verbindung (19) 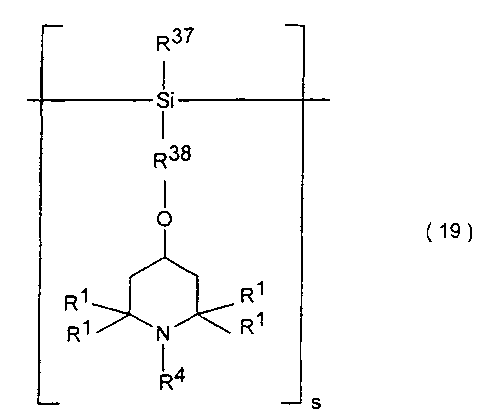 wobei
   - R¹ und R⁴: die bei Verbindung (9) angegebenen Bedeutungen haben, und
   - s: eine Zahl von 1 bis 50 ist,
   - R³⁷: C₁-C₁₀-Alkyl, C₅-C₁₂-Cycloalkyl, durch C₁-C₄-Alkyl substituiertes C₅-C₁₂-Cycloalkyl, Phenyl oder durch C₁-C₁₀-Alkyl substituiertes Phenyl ist,
   - R³⁸: C₃-C₁₀-Alkylen darstellt;
   einem Produkt U4 erhältlich durch Umsetzung eines Polyamins der vorstehend beschriebenen Formel U3a mit Formel U4a: 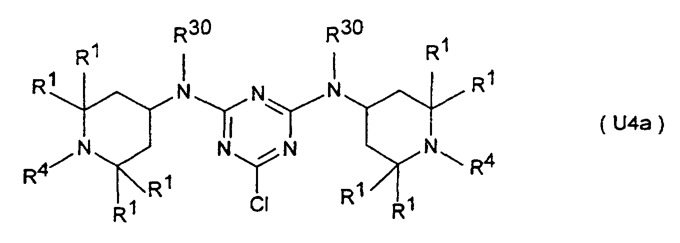 wobei die Reste R¹, R⁴ und R³⁰ die bei Verbindung (9) bzw. Verbindung U3b angegebenen Bedeutungen haben;
D) und 25-50 Gew.% einer Stearats Z eines Erdalkalimetalls.

Besonders bevorzugt sind Additiv-Mischungen, enthaltend
A) mindestens eine der folgenden Verbindungen
   Tris-(2,4-di-tert.-butylphenyl)phosphit, Distearyl-pentaerythritoldiphosphit, Bis-(2,4-di-tert-butylphenyl)-pentaerythritoldiphosphit, 1,3,2-Dioxaphosphorinan-5-butyl-5-ethyl-2-[2,4,6-tri-tert.butylphenoxy], 2,2',2''-Nitrilo[triethyl-tris(3,3',5,5'tetra-tert-butyl-1,1'-biphenyl-2,2'-diyl)phosphit], Tetrakis(2,4-di-tert.butyl)-4,4'diphenyliden-diphosphit, sowie seiner Stellungsisomeren oder einer Mischung daraus, Bis(2,4-dicumylphenyl)pentaerythritol-diphosphit;
B) mindestens eine der folgenden Verbindungen
   3,3-Bis-(3'-tert-butyl-4'-hydroxyphenyl)-buttersäureglykolester, Tetrakismethylen-(3,5-di-tert.-butyl-4-hydroxyzinamat)methan, Octadecyl-3,5-di-tert.-butyl-4-hydroxyzinamat, α-Tocopherol und die Mischung seiner Isomeren, 1,3,5-Trimethyl-2,4,6-tris(3,5-di-tert.-butyl-4-hydroxybenzyl)benzol, 1,3,5-Tris(3,5-di-tert.-butyl-4-hydroxybenzyl)isocyanurat, 2,4,6-Tris(3,5-di-tert.butyl-4-hydroxybenzyl)isocyanurat oder eine vorstehend beschriebene Verbindung der Formel (8);
C) mindestens eine der folgenden Verbindungen
   die vorstehend beschriebene Mischung M, 2,2,4,4-Tetramethyl-20-(oxiranylmethyl)-7-oxa-3,20-diaza-dispiro-[5.1.11.2]heneicosan-21-on; 2,2,4,4-Tetramethyl-7-oxa-21-oxo-3,20-diaza-dispiro-[5.1.11.2]-heneicosan-3-propansäure-dodecylester und 2,2,4,4-Tetramethyl-7-oxa-21-oxo-3,20-diazadispiro-[5.1.11.2]-heneicosan-3-propansäure-tetradecylester, Bis-(2,2,6,6-tetramethylpiperidin-4-yl)-sebacat, [(4-Methoxyphenyl)-methylen]propandisäure-bis-(2,2,6,6-tetramethyl-4-piperidinyl)-ester, Bis-(1-octyloxy-2,2,6,6-tetramethylpiperidyl)-sebacat, N,N'-Di-formyl-N,N'-bis-(2,2,6,6-tetramethyl-4-piperidinyl)-hexamethylendiamin,
   das vorstehend beschriebene Umsetzungsprodukt U1 aus Epichlorhydrin, die vorstehend beschriebenen Verbindungen der Formel (9), (13) und (14), eine Verbindung (19) 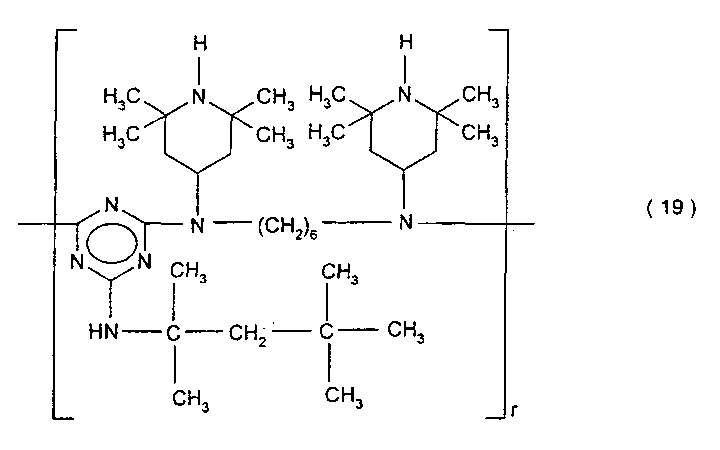 die Umsetzungsprodukte Uₓ von 2-Chlor-4,6-di-(4-n-butylamino-1,2,2,6,6-pentamethylpiperidyl)-1,3,5-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-aminopropylamino)äthan,
   die Verbindungen der Formeln (20) bis (23) 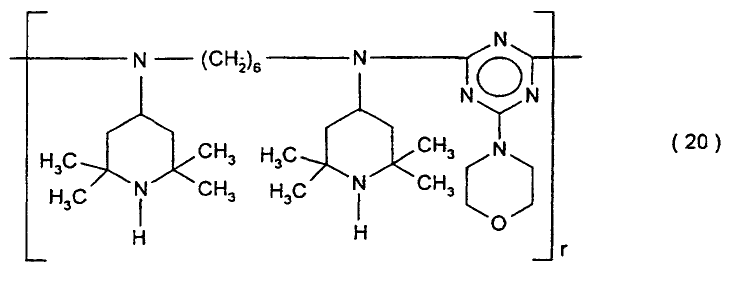 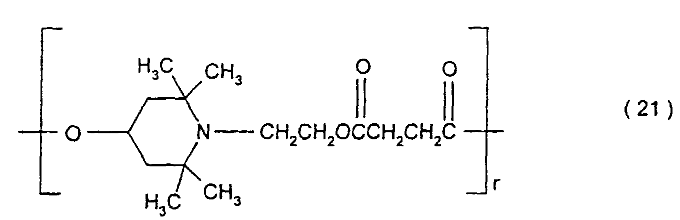 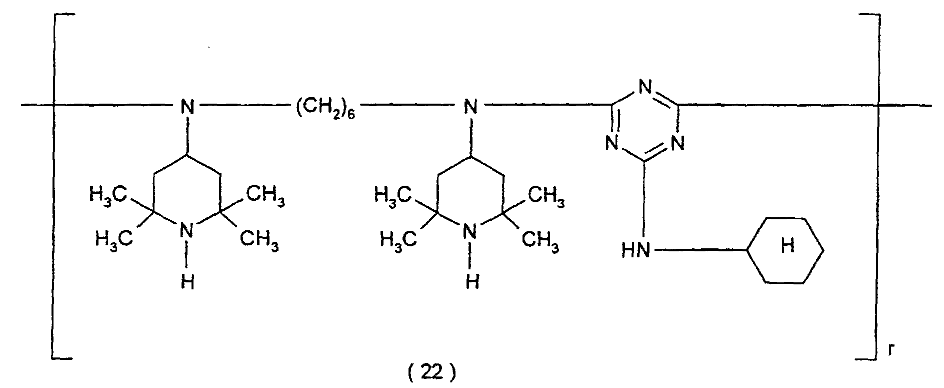 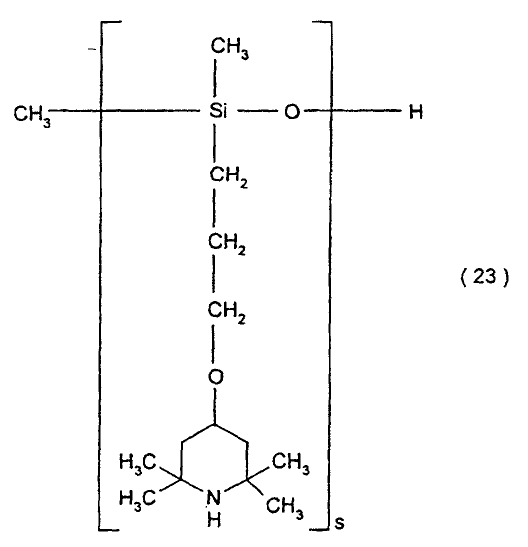 ein Produkt U5 erhältlich durch Umsetzung eines durch Reaktion eines Polyamins der Formel U5a:

   H₂N-(CH₂)₃-NH-(CH₂)₂-NH-(CH₂)₃-NH₂ (U5a)

   mit Cyanursäurechlorid erhaltenen Produktes mit einer Verbindung der Formel (U5b) 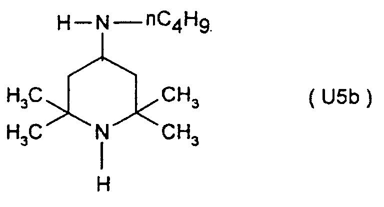 sowie mindestens eine Komponente der vorstehend beschriebenen Formeln (13) und (14).

Besonders bevorzugt sind Verfahren gemäß dem Anspruch 3, enthaltend.

Zusätzlich können Gleitmittel, wie sie in Plastics Additives Handbook, Ed. by R. Gächter and H. Müller, Hansa Publishers Munich, 4th Editon, 1993 in Kapitel 6.4.2. beschrieben sind, z. B. Bisstearyletyhlendiamin oder Natriumalkansulfonate mit einer Kettenlänge von C₈-C₂₀ oder Polyolefinwachse mit einem Molgewicht bis 10.000, vorzugsweise 50-8000, eingesetzt werden.

Bevorzugt sind Verfahren gemäß dem Anspruch 4.

Ganz besonders bevorzugt werden Polyolefin-Formmassen verwendet, worin das Polymer Polyethylen, Polypropylen, Polyisobutylen, Polybuten-1, Polymethylpenten-1, Polyisopren, Polybutadien, ein Ethylen-Propylen-Copolymer, ein Propylen-Butadien-Copolymer, ein Isobutylen-Isopren-Copolymer, ein Ethylen-Alkylacrylat-Copolymer, ein Ethylen-Alkylmethacrylat-Copolymer, ein Ethylen-Vinylacetat-Copolymer oder ein Ethylen-Acrylsäure-Copolymer ist.

Geeignete Olefinpolymere sind in der deutschen Patentanmeldung Nr. 197 19944.5 auf Seite 44 - 46 beschrieben, worauf hier ausdrücklich Bezug genommen wird.

Von den genannten Polymeren werden bevorzugt eingesetzt Homo- und Copolymere des Propylens sowie deren Mischungen mit Terpolymeren von Propylen, Ethylen und einem Dien.

Die Polyolefinmasse der Erfindung kann zusätzlich auch weitere verschiedene herkömmliche Additive enthalten wie sie beispielsweise in der deutschen Patentanmeldung Nr. 197 19944.5 auf Seite 51-65 unter Punkt 1-15 beschrieben sind, worauf hier ausdrücklich Bezug genommen wird.

### Versuchsbeschreibung

Die Herstellung der erfindungsgemäßen Polyolefinformmassen erfolgt nach bekannten Methoden. Sie kann beispielsweise durch Einmischen der Stabilisatoren und gegebenenfalls weiterer Additive nach den in der Technik üblichen Verfahren bei der Polymerisation der Monomeren oder vor oder während der Formgebung, oder auch durch Aufbringen der gelösten, oder dispergierten Verbindungen auf das Polymer erfolgen, gegebenenfalls unter nachträglichem Verdunsten des Lösemittels. Die Stabilisatoren können auch in Form eines Masterbatches, welcher diese Produkte in einer Konzentration von ca. 2,5 bis 25 Gew.-% enthalten kann, der herzustellenden Formmasse zugesetzt werden. Eine Zugabe vor einer eventuellen Vemetzung ist ebenfalls möglich.
Zur Herstellung von Kalanderfolien wird die erfindungsgemäße Formmasse nach den für PVC-Kalanderfolien üblichen Verfahren verarbeitet. Dazu wird sie zunächst plastiziert und homogenisiert, beispielsweise auf einem Mischwalzwerk oder in einem Kneter. Danach wird sie in den Spalt zwischen der ersten und der zweiten Walze eines Folienkalanders mit drei bis sieben, meist vier, Walzen gegeben und im plastischen Zustand zu einer Folie ausgezogen, die gekühlt und aufgewickelt wird. Die Verarbeitungstemperatur liegt im allgemeinen im Bereich von 170 bis 250°C, in Ausnahmefällen höher, und ist abhängig vom Schmelzverhalten des Basispolymeren.

### Beispiele A bis P

Die Untersuchungen des Verarbeitungsverhaltens der Polypropylen-Formmasse im Vergleich zu einer PVC-Kalanderfolien-Formmasse wurden auf einem Zweiwalzwerk (Stahlwalzen Ø 150 mm/Temperatur 190°C/Friktion 15/20 U/min) anhand einer dynamischen Stabilitätsprüfung durchgeführt. Dieses Prüfverfahren findet zur Beurteilung der Kalandrierbarkeit vor allem von PVC-Mischungen Anwendung. Der PVC-Ansatz A wurde nach dem Einwiegen durch Heißmischen in einer Heiz-Kühlmischerkombination auf 120°C erhitzt und durch anschließendes Abkühlen auf Raumtemperatur hergestellt.

Vor Durchführung der Prüfung der dynamischen Stabilität wurden die Polypropylen-Formmassen gemäß Tabelle 1 jeweils kalt vorgemischt, die so entstandenen Mischungen auf einem Einschneckenextruder bei einer Zylindertemperatur von 190°C/210°C/230°C/240°C extrudiert und anschließend stranggranuliert.

Für jede Prüfung wurden jeweils 200 g einer Formmasse auf ein Zweiwalzwerk zur dynamischen Stabilitätsprüfung gegeben. Als Prüfkriterium für die Bestimmung des Zeitraums von der Beendigung der Walzfellbildung bis zum Festkleben der Polymerschmelze an den heißen Metalloberflächen des Zweiwalzwerks (klebefreie Zeit) diente der Zeitpunkt, an welchem sich das 1 mm dicke Walzfell nicht mehr mit Hilfe eines Holzspatels von der Seite zur Mitte der Walze hin aufrollen läßt. Jeweils nach 30 minütiger Walzzeit wurde außerdem ein Prüfmuster von 30 g zur Bestimmung des MFI-Wertes entnommen. Zusätzlich wurde bei einigen Versuchen der MFI-Wert nach 5, 10 und 20 min Laufzeit ermittelt.

Die Prüfergebnisse sind in Tabelle 2 zusammengestellt. Aus den Versuchsergebnissen ist zu erkennen, daß eine in üblicher Weise stabilisierte Polypropylen-Formmasse (C) bei gleichen Prüfbedingungen im Vergleich zu einer PVC-Formmasse für Kalanderfolien (A) schon nach kurzer Laufzeit auf den heißen Walzenoberflächen festklebt und das Polypropylen-Walzfell nicht mehr von den Walzen abgezogen werden kann. Durch die thermische Belastung baut die Polypropylen-Formmasse stark ab, wobei ihre Viskosität ebenfalls stark abnimmt.

Es ist weiterhin zu erkennen, daß der Zusatz verschiedener Antioxidantien und Gleitmittel zwar den Beginn des Anklebens des Polypropylenfilms an den heißen Metalloberflächen des Zweiwalzwerks verzögert, das geforderte klebfreie Verarbeitungsverhalten und eine erhebliche Verminderung des Abbaus der Polymerkette durch diese Zusätze nicht erreicht werden kann.

Erst der Einsatz der erfindungsgemäßen Additiv-Mischung bringt die gewünschte Trennwirkung an den heißen Walzenoberflächen und führt zur Erhaltung der zur Verarbeitung auf Kalanderanlagen erforderlichen hohen Viskosität der Polymerschmelze, d.h. zu einem verminderten Abbau der Polymermoleküle.

**Tabelle 1**

| (alle Mengenangaben in phr) | | |
|---|---|---|
| Vgl. A | | 100,0 S-PVC, K-Wert 60 |
| | 1,5 | Octyl-Zinnmercaptid |
| | 0,5 | Glycerinmonoleat |
| | 0,5 | Ester der Montansäure mit Glycerin |
| | | |
| B | 100,0 | Polypropylen (MFI 230/2,16 = 8,5 g/10 min) unstabilisiert |
| | | |
| C | 100,0 | Polypropylen (MFI 230/2, 16 = 6 g/10 min) grundstabilisierte Handelsware |
| | | |
| D | 100,0 | Polypropylenblend Handelsware mit 20 % Kreide |
| | | |
| E | 100,0 | Polypropylen |
| | 0,08 | Tetrakismethylen-(3,5-di-tert.-butyl-4-hydroxyhydrozinnamat)methan |
| | 0,08 | Tris-(2,4-di-tert.-butylphenyl)phosphit |
| | 0,55 | Ca-Stearat |
| | | |
| F | 100,0 | Polypropylen |
| | 0,2 | Calciumstearat |
| | 0,15 | Bistearyletyhlendiamin |
| | 0,1 | Tetrakismethylen-(3,5-di-tert.-butyl-4-hydroxyhydrozinnamat)methan |
| | 0,1 | Tris-(2,4-di-tert.-butylphenyl)phosphit |
| | | |
| G | 100,0 | Polypropylen |
| | 0,2 | Calciumstearat |
| | 0,35 | Bistearyletyhlendiamin |
| | 0,15 | Bis-(3,3-bis-(4'-hydroxy-3'tert.butylphenyl)butansäure)-glykolester |
| | 0,10 | Tris-(2,4-di-tert.-butylphenyl)phosphit |
| | 0,10 | Distearyl-3,3'-thiodipropionat |
| | 0,10 | Octadecyldisulfid |
| | | |
| H | 100,0 | Polypropylen |
| | 0,2 | Calciumstearat |
| | 0,15 | Bistearyletyhlendiamin |
| | 0,25 | Mischung M |
| | | |
| I | 100,0 | Polypropylen |
| | 0,2 | Calciumstearat |
| | 0,15 | Bistearyletyhlendiamin |
| | 0,10 | Tetrakismethylen-(3,5-di-tert.-butyl-4-hydroxyhydrozinnamat)methan |
| | 0,10 | Tris-(2,4-di-tert.-butylphenyl)phosphit |
| | 0,25 | Mischung M |
| | | |
| K | 100,0 | Polypropylen |
| | 0,2 | Calciumstearat |
| | 0,1 | Tetrakismethylen-(3,5-di-tert.-butyl-4-hydroxyhydrozinnamat)methan |
| | 0,1 | Tris-(2,4-di-tert.-butylphenyl)phosphit |
| | 0,25 | Mischung M |
| | | |
| L | 100,0 | Polypropylen |
| | 0,2 | Calciumstearat |
| | 0,1 | Tetrakismethylen-(3,5-di-tert.-butyl-4-hydroxyhydrozinnamat)methan |
| | 0,1 | Tris-(2,4-di-tert.-butylphenyl)phosphit |
| | 0,25 | Verbindung (21) |
| | 0,15 | Bistearyletyhlendiamin |
| | | |
| M | 100,0 | Polypropylen |
| | 0,2 | Calciumstearat |
| | 0,1 | Tetrakismethylen-(3,5-di-tert.-butyl-4-hydroxyhydrozinnamat)methan |
| | 0,1 | Tris-(2,4-di-tert.-butylphenyl)phosphit |
| | 0,25 | Verbindung Uₓ |
| | 0,15 | Bistearyletyhlendiamin |
| | | |
| N | 100,0 | Polypropylen |
| | 0,2 | Calciumstearat |
| | 0,1 | Tetrakismethylen-(3,5-di-tert.-butyl-4-hydroxyhydrozinnamat)methan |
| | 0,1 | Tris-(2,4-di-tert.-butylphenyl)phosphit |
| | 0,25 | Bis-(2,2,6,6-tetramethylpiperidin-4-yl)sebacat |
| | 0,15 | Bistearyletyhlendiamin |
| | | |
| O | 100,0 | Polypropylen |
| | 0,2 | Calciumstearat |
| | 0,1 | Tetrakismethylen-(3,5-di-tert.-butyl-4-hydroxyhydrozinnamat)methan |
| | 0,1 | Tris-(2,4-di-tert.-butylphenyl)phosphit |
| | 0,25 | 2,2,4,4-Tetramethyl-7-oxa-21-oxo-3,20-diaza-dispiro-[5.1.11.2]-heneicosan-3-propansäuredodecylester und 2,2,4,4-Tetramethyl-7-oxa-21-oxa-3.20-diaza-dispiro-[5.1.11.2]-heneicosan-3-propansäuretetradecylester |
| | 0,15 | Bistearyletyhlendiamin |
| | | |
| P | 100,0 | Polypropylen |
| | 0,2 | Calciumstearat |
| | 0,08 | Tetrakismethylen-(3,5-di-tert.-butyl-4-hydroxyhydrozinnamat)methan |
| | 0,1 | Tetrakis(di-tert.butyl)diphenyliden-diphosphit (Formel 7) |
| | 0,25 | 2,2,4,4-Tetramethyl-7-oxa-21-oxo-3,20-diaza-dispiro-[5.1.11.2]-heneicosan-3-propansäuredodecylester und 2,2,4,4-Tetramethyl-7-oxa-21-oxo-3.20-diaza-dispiro-[5.1.11.2]-heneicosan-3-propansäuretetradecylester |
| | 0,15 | Bistearyletyhlendiamin |

**Tabelle 2**

| Dynamische Stabilitätsprüfung auf Zweiwalzwerk bei 190°C und 15/20 U/min. | |
|---|---|
| Mischung | Klebefreie Zeit (min) |
| A* | 45 |
| B* | < 1 |
| C* | < 1 |
| D* | 12 |
| E* | 25 |
| F* | 45 |
| G* | 125 |
| H* | < 1 |
| I | > 180 |
| K | > 180 |
| L | > 180 |
| M | > 180 |
| N | > 180 |
| O | > 180 |
| P | > 180 |

| | |
|---|---|
| (* = Vergleich). | |

Wie Beispiel I - P zeigt, können mit den beschriebenen Kombinationen ausgezeichnete Verarbeitungsstabilitäten, die sich durch lange klebefreie Zeiten auszeichnen, erreicht werden.

## Patentansprüche

1. Verfahren zur Herstellung von kalandrierten Polyolefin-Artikeln durch Plastizieren einer Polyolefin-Formmasse, enthaltend 95,0 bis 99,97 Gew.-% eines Olefinpolymers und 0,03 bis 5,0 Gew.-% an Additiven, und durch Ausziehen im plastischen Zustand auf einem Folienkalander, **dadurch gekennzeichnet, dass** die Additive sich zusammensetzen aus
A) 1 bis 48 Gew.-% mindestens eine Komponente aus der Gruppe von Phosphor oder Schwefel enthaltenden, Peroxid zersetzenden Verbindungen der Formeln (1) bis (5) 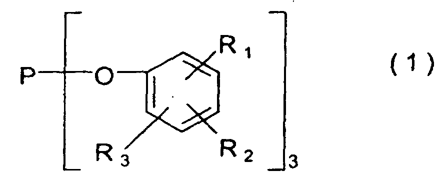 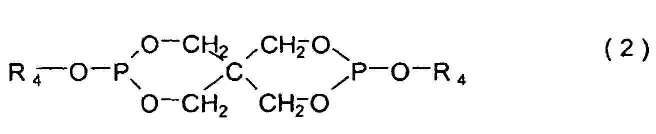
R⁵-(Sₓ)-R⁵ (3) 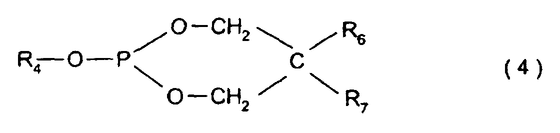 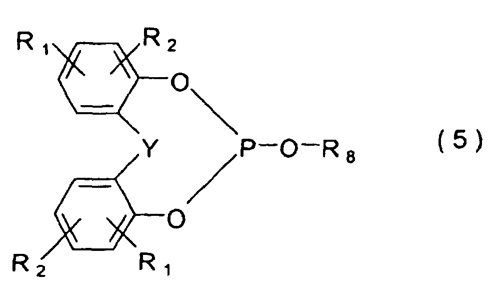
worin
R¹, R² und R³ gleich oder verschieden sind und ein Wasserstoffatom, eine Methylgruppe, eine t-Butylgruppe, eine 1,1-Dimethylpropylgruppe, eine Cyclohexylgruppe oder Phenylrest bedeuten, der gegebenenfalls mit R¹ bis R³ obiger Definition unter Ausschluß eines weiteren Phenylrests substituiert ist,
R⁴ eine C₈-C₂₂-Alkylgruppe oder einen Rest der Formel (6) 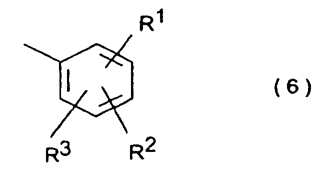 bedeutet,
worin R¹ bis R³ die vorgenannte Bedeutung haben oder 2-Phenyl-2,2-dimethylethylgruppen sein können,
R⁵ eine C₈-C₂₀-Alkylgruppe bedeutet und x eine ganze Zahl von 1 bis 5 ist oder R⁵ C₈-C₈-C₂₀-O(O)C-CH₂-CH₂- bedeuten kann,
R⁶ und R⁷ gleich oder verschieden sein können und ein Wasserstoffatom, eine Methylgruppe, eine Ethylgruppe, eine n-Butylgruppe, eine t-Butylgruppe oder eine Propylgruppe bedeuten können,
R⁸ ein Halogenatom, eine verzweigte oder unverzweigte C₁-C₁₀-Alkylgruppe, eine trivalente Gruppe der Formel
N-(-CH₂-CH₂-)₃-
sein kann, bei der jede Valenz mit Formel (5) belegt ist, so daß sich die Struktur N-[CH₂-CH₂-O-P-Rest von Formel (5)]₃ ergibt;
Y eine direkte Bindung, eine Methylen-Gruppe oder eine mit Alkyl substituierte Alkylenbrücke mit insgesamt 4 C-Atomen bedeutet;
eine Verbindung der Formel (7) 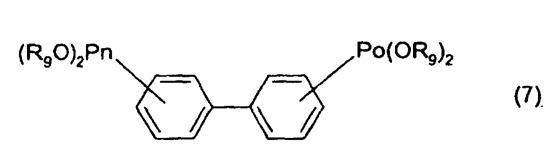 wobei die Summe aus n und o 1 oder 2 ergeben kann und
R⁹ ein Rest der Formel (6) ist,
und
B) 1 bis 48 Gew.% mindestens einer Komponente aus der Gruppe von phenolischen Antioxidantien, bestehend aus 3,3-Bis-(3'-tert-butyl-4'-hydroxyphenyl)-buttersäureglykolester, Tetrakismethylen-(3,5-di-tert.-butyl-4-hydroxyzinamat)methan, Octadecyl-3,5-di-tert.-butyl-4-hydroxyzinamat, 1,3,5-Trimethyl-2,4,6-tris(3,5-di-tert.-butyl-4-hydroxybenzyl)benzol, 1,3,5-Tris(3,5-di-tert.-butyl-4-hydroxybenzyl)isocyanurat, 2,4,6- Tris(3,5-di-tert.-butyl-4-hydroxybenzyl)isocyanurat, 1,1,3-Tris(2'-methyl-4'-hydroxy-5'-tert.butylphenyl)butan, 3,9-Bis[1,1-dimethyl-2-(di-tert.butyl-4-hydroxy-5-methylphenyl)propionyloxy)ethyl]-2,4,8,10-tetraoxospiro[5.5]undecan, α-Tocopherol einschließlich seiner Isomerenmischung und der Formel (8) 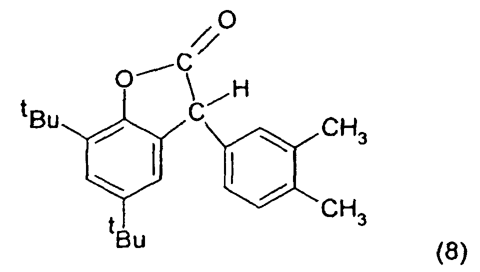 und
C) 4 bis 98 Gew.-% mindestens einer Komponente aus der Gruppe der sterisch gehinderten Amine der nachfolgend aufgeführten Namen oder Formeln, bestehend aus der Verbindung (9) 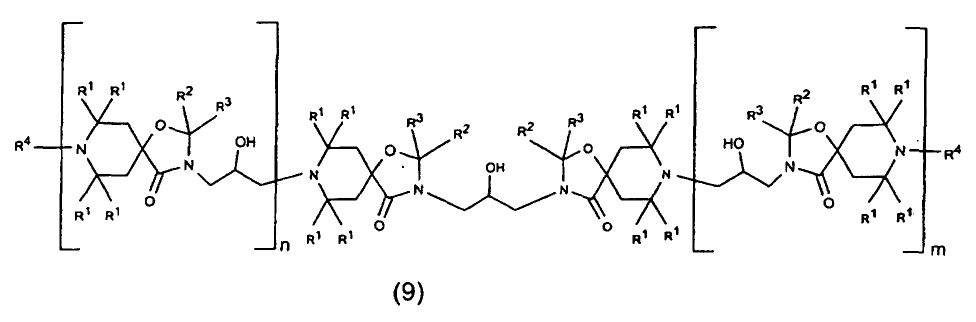 worin
n und m unabhängig voneinander eine Zahl von 0 bis 100, wobei n und m nicht gleichzeitig 0 sein können,
R¹ Wasserstoff oder eine C₁-C₁₂-Alkylgruppe,
R² und R³ unabhängig voneinander ein Wasserstoffatom, eine C₁-C₁₈-Alkylgruppe oder zusammen mit dem sie verbindenden C-Atom einen Ring der Ringgröße 5 bis 13, oder zusammen mit dem sie bindenden C-Atom eine Gruppe der Formel (10), 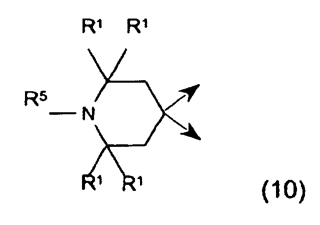
wobei
R⁴ in Formel (9) und R⁵ in Formel (10) unabhängig voneinander entweder Wasserstoff oder eine C₁-C₂₂ -Alkylgruppe, ein Sauerstoffradikal O*, -OH, -NO, -CH₂CN, Benzyl, Allyl, eine C₁-C₃₀-Alkyloxygruppe, eine C₅-C₁₂-Cycloalkyloxygruppe, eine C₆-C₁₀-Aryloxygruppe, wobei der Arylrest zusätzlich noch substituiert sein kann; eine C₇-C₂₀-Arylalkyloxygruppe, wobei der Arylrest zusätzlich noch substituiert sein kann, eine C₃-C₁₀-Alkenylgruppe, eine C₃-C₆-Alkinylgruppe, eine C₁-C₁₀-Acylgruppe, Halogen, unsubstituiertes oder am Phenylring durch C₁-C₄ substituiertes C₇-C₉-Phenylalkyl;
der Verbindung (11) 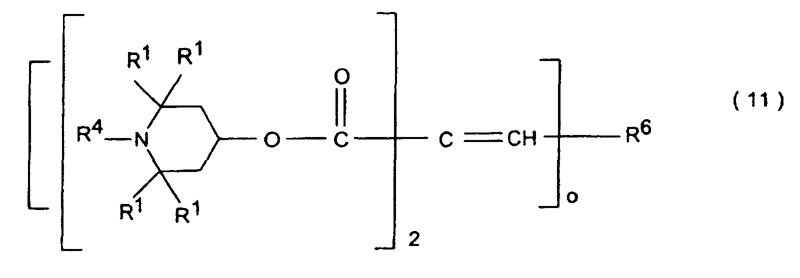 worin R¹ und R⁴ die bei Formel (9) angeführten Bedeutungen haben,
R⁶ einen gegebenenfalls substituierten aromatischen Rest und
o 1 oder 2 bedeuten;
der Verbindung (12) 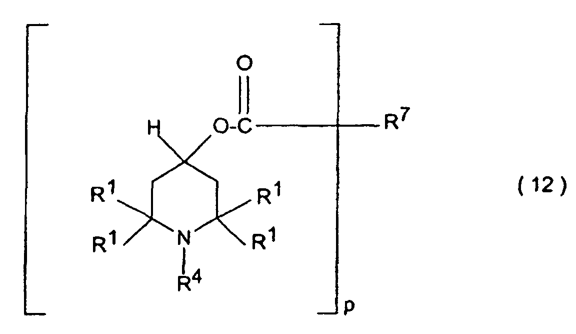 worin R¹ und R⁴ die bei Formel (9) angeführten Bedeutungen haben,
R⁷ C₁-C₁₈-Alkylen, C₂-C₁₈-Oxaalkylen, C₂-C₁₈-Thiaalkylen, C₂-C₁₈-Azaalkylen oder C₂-C₈-Alkenylen ist; ein C₁-C₁₈- n-valenter aliphatischer Rest; R³ ist als C₁-C₁₈-Alkylen verzweigtes oder insbesondere geradkettiges Alkylen,
p die Zahlen 1 bis 10 bedeutet;
den Verbindungen
5,11-Bis-(2,2,6,6-tetramethyl-4-piperidinyl)-3,5,7,9,11,13-hexaaza-tetracyclo-[7.4.0.0^{2,7}.1^{3,13}]-tetradecan-8,14-dion; 2,2,4,4-Tetramethyl-20-(oxiranyl- methyl)-7-oxa-3,20-diaza- dispiro[5.1.11.2]heneicosan-21-on;
2,2,4,4-Tetramethyl-7-oxa-21-oxo-3,20-diaza-dispiro-[5.1.11.2]-heneicosan-3-propansäure-dodecylester und 2,2,4,4-Tetramethyl-7-oxa-21-oxo-3,20-diaza-dispiro-[5.1.11.2]-heneicosan-3-propansäure-tetradecylester;
mindestens einer Komponente der Formel (13) und (14) 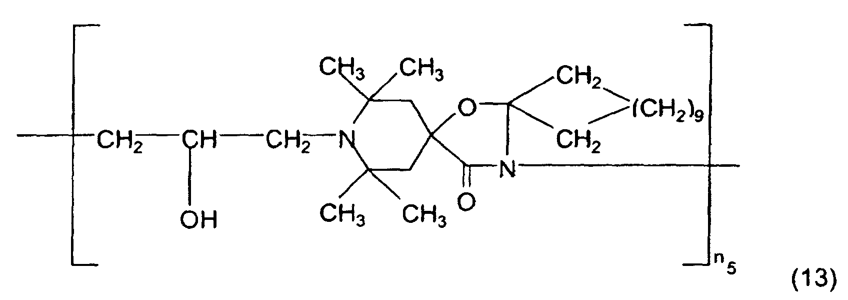 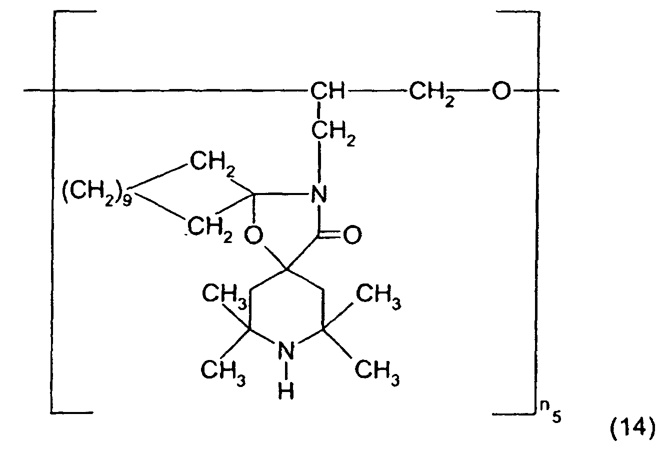 worin n₅ unabhängig voneinander eine ganze Zahl von 2-30 sind;
dem Umsetzungsprodukt U I aus Epichlorhydrin und 2,2,4,4-Tetramethyl-20-(oxiranylmethyl)-7-oxa-3,20-diaza-dispiro[5.1.11.2]heneicosan-21-on;
einer Mischung M, enthaltend die vorstehend beschriebene Verbindung (9) zu einem Anteil von 60-95 Gew.-%, die Verbindung (15) zu einem Anteil von 4-30 Gew.-%, und die Verbindung (16) zu einem Anteil von 1-10 Gew.-%, 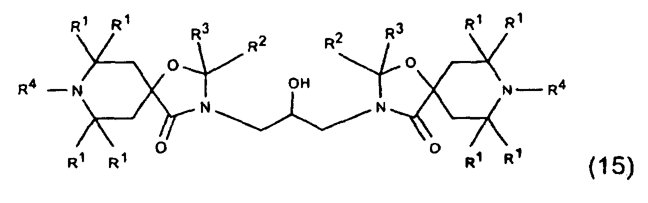 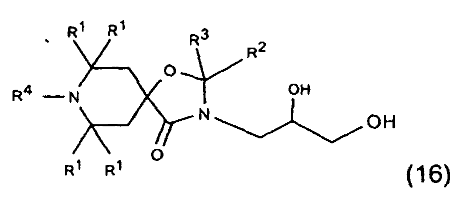 worin die Substituenten die bei Verbindung (9) genannte Bedeutung haben,
einer Verbindung U2, die ein Kondensationsprodukt aus 1-Hydroxyethyl-2,2,6,6-tetramethyl-4-hydroxypiperidin und Bernsteinsäure darstellt;
einem Produkt U3 erhältlich durch Umsetzung eines durch Reaktion eines Polyamins der Formel U3a mit Cyanursäurechlorid erhaltenen Produktes mit einer Verbindung der Formel U3b,
H₂N―(CH₂)_{n_{5'}}―NH―(CH₂)_{n_{5"}}―NH―(CH₂)_{n_{5'''}}―NH₂ (U3a) 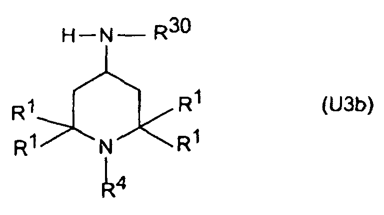
wobei
R¹ und R⁴ die bei Verbindung (9) angegebenen Bedeutungen haben,
n_{5'}, n_{5"} und n_{5'''} unabhängig voneinander eine Zahl von 2 bis 12 ist,
R³⁰ Wasserstoff, C₁-C₁₂-Alkyl, C₅-C₁₂-Cycloalkyl, Phenyl oder C₇-C₉-Phenylalkyl ist; wobei U3 eine Verbindung der Formel U3-1, U3-2, U3-3 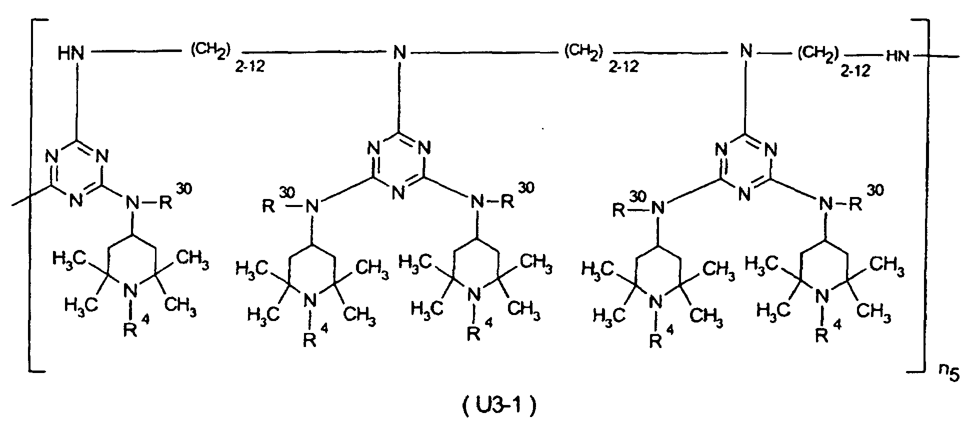 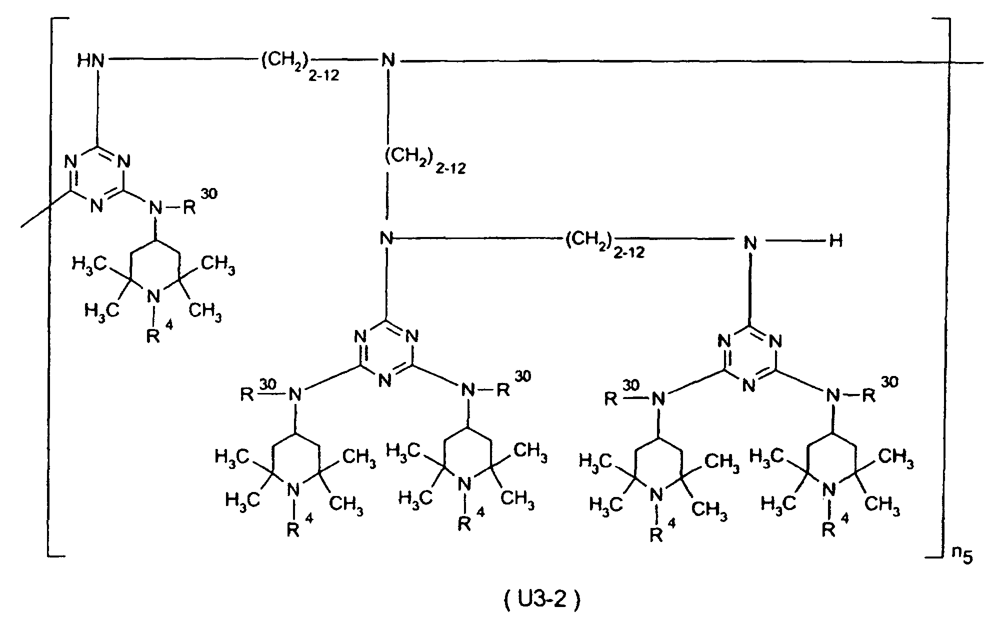 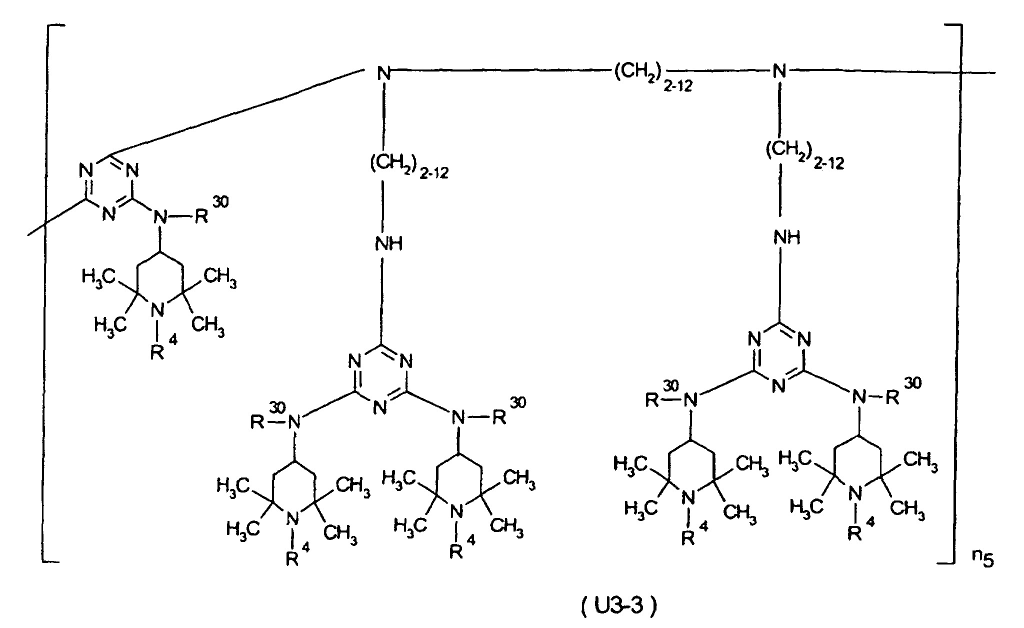
oder ein Gemisch daraus darstellt, worin
n₅ 1 bis 20,
R⁴ und R³⁰ die bei Verbindung (9) bzw. bei Verbindung U3b angegebene Bedeutung haben;
einer Verbindung (17) 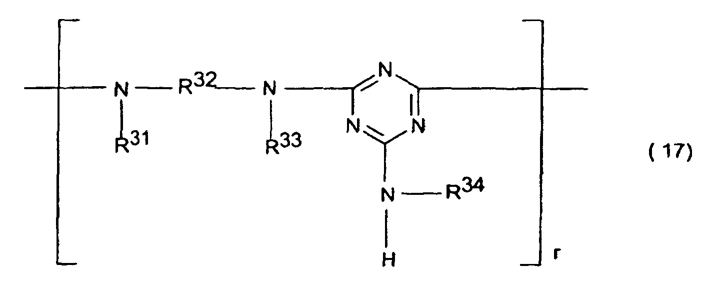 wobei
r eine Zahl von 2 bis 50 darstellt,
R³¹, R³³ und R³⁴ unabhängig voneinander Wasserstoff, C₁-C₁₂-Alkyl, C₅-C₁₂-Cycloalkyl, durch C₁-C₄-Alkyl substituiertes C₅-C₁₂-Cycloalkyl, Phenyl, durch OH und/oder C₁-C₁₀-Alkyl substituiertes Phenyl, C₇-C₉-Phenylalkyl, am Phenylrest durch -OH und/oder C₁-C₁₀-Alkyl substituiertes C₇-C₉-Phenylkalkyl oder eine Gruppe der Formel 17a bedeuten, 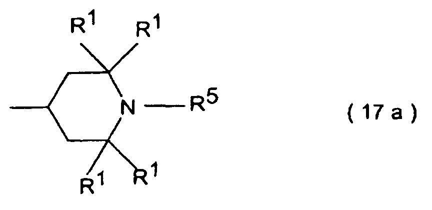
wobei
R¹ und R⁵ die bei Verbindung (9) bzw. Verbindung (10) angegebenen Bedeutungen haben, und
R³¹ und R³³ zusätzlich unabhängig voneinander Wasserstoff darstellen,
R³² C₂-C₁₈-Alkylen, C₅-C₇-Cycloalkylen oder C₁-C₄-Alkylendi(C₅-C₇-Cyloalkylen) ist oder die Reste R³¹, R³² und R³³ zusammen mit den Stickstoffatomen, an die sie gebunden sind, einen 5- bis 10-gliedrigen heterocyclischen Ring bilden, und wobei mindestens einer der Reste R³¹, R³³ und R³⁴ eine Gruppe der Formel 17a darstellt;
einer Verbindung (18) 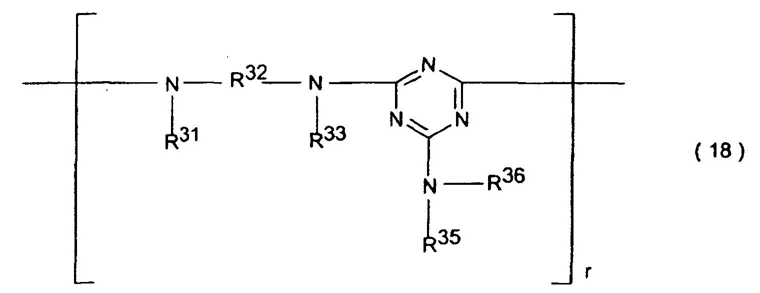 worin
R³¹ , R³² , R³³ und r die oben angegebenen Bedeutungen haben,
R³⁵ und R³⁶ unabhängig voneinander die Definition von R³⁴ haben kann, oder R³⁵ und R³⁶ zusammen mit dem Stickstoffatom, an das sie gebunden sind, einen 5-bis 10-gliedrigen heterozyklischen Ring bilden, wobei dieser zusätzlich zum Stickstoff-Heteroatom noch ein oder mehrere Heteroatome, vorzugsweise ein Sauerstoffatom, enthalten kann und mindestens einer der Reste R³¹, R³³, R³⁵ und/oder R³⁶ eine Gruppe der Formel (17a) darstellt ;
einer Verbindung (19) 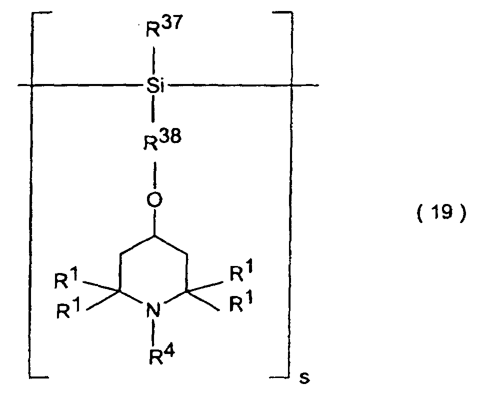 wobei
R¹ und R⁴ die bei Verbindung (9) angegebenen Bedeutungen haben,
s eine Zahl von 1 bis 50 ist,
R³⁷ C₁-C₁₀-Alkyl, C₅-C₁₂-Cycloalkyl, durch C₁-C₄-Alkyl substituiertes C₅-C₁₂-Cycloalkyl, Phenyl oder durch C₁-C₁₀-Alkyl substituiertes Phenyl ist,
R³⁸ C₃-C₁₀-Alkylen darstellt;
einem Produkt U4 erhältlich durch Umsetzung eines Polyamins der vorstehend beschriebenen Formel U3a mit Formel U4a: 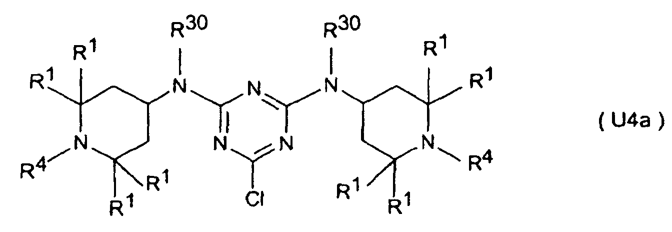 wobei die Reste R¹, R⁴ und R³⁰ die bei Verbindung (9) bzw. bei Verbindung U3b angegebenen Bedeutungen haben;
und
D) 25 bis 50 Gew.% eines Stearats Z eines Erdalkalimetalls.

2. Verfahren gemäß Anspruch 1, **dadurch gekennzeichnet dass** die Additive sich zusammensetzen aus
A) 1 bis 48 Gew.-% mindestens einer der folgenden Verbindungen Tris-(2,4-di-tert.-butylphenyl)phosphit, Distearyl-pentaerythritdiphosphit, Bis-(2,4-di-tert.-butylphenyl)-pentaerythritdiphosphit, 1,3,2-Dioxaphosphorinan-5-butyl-5-ethyl-2-[2,4,6-tri-tert.butylphenoxy], 2,2',2"-Nitrilo[triethyltris(3,3',5,5'-tetra-tert-butyl-1,1'-biphenyl-2,2'-diyl)phosphit], Tetrakis(2,4-ditert.butyl)-4,4'-diphenyliden-diphosphit, sowie seiner Stellungsisomeren oder einer Mischung daraus, Bis(2,4-dicumylphenyl)pentaerithriol-diphosphit;
B) 1 bis 48 Gew.-% mindestens einer der folgenden Verbindungen 3,3-Bis-(3'-tert-butyl-4'-hydroxyphenyl)-buttersäureglykolester, Tetrakismethylen-(3,5-di-tert.-butyl-4-hydroxyzinamat)methan, Octadecyl-3,5-di-tert.-butyl-4-hydroxyzinamat, α-Tocopherol und die Mischung seiner Isomeren, 1,3,5-Trimethyl-2,4,6-tris(3,5-di-tert.-butyl-4-hydroxybenzyl)benzol, 1,3,5-Tris(3,5-di-tert.-butyl-4-hydroxybenzyl)isocyanurat, 2,4,6-Tris(3,5-di-tert.butyl-4-hydroxybenzyl)isocyanurat oder eine vorstehend beschriebene Verbindung der Formel (8);
C) 4 bis 98 Gew.-% mindestens einer der folgenden Verbindungen die vorstehend beschriebene Mischung M, 2,2,4,4-Tetramethyl-20-(oxiranylmethyl)-7-oxa-3,20-diaza-dispiro-[5.1.11.2]heneicosan-21-on; 2,2,4,4-Tetramethyl-7-oxa-21-oxo-3,20-diaza-dispiro-[5.1.11.2]-heneicosan-3-propansäure-dodecylester und 2,2,4,4-Tetramethyl-7-oxa-21-oxo-3,20-diazadispiro-[5.1.11.2]-heneicosan-3-propansäure-tetradecylester, Bis-(2,2,6,6-tetramethylpiperidin-4-yl)-sebacat, [(4-Methoxyphenyl)-methylen]-propandisäure-bis-(2,2,6,6-tetramethyl-4-piperidinyl)-ester, Bis-(1-octyloxy-2,2,6,6-tetramethylpiperidyl)-sebacat, N,N'-Di-formyl-N,N'-bis-(2,2,6,6-tetramethyl-4-piperidinyl)-hexamethylendiamin,
das vorstehend beschriebene Umsetzungsprodukt U1 aus Epichlorhydrin, die vorstehend beschriebenen Verbindungen der Formel (9), (13) und (14),
eine Verbindung (19) 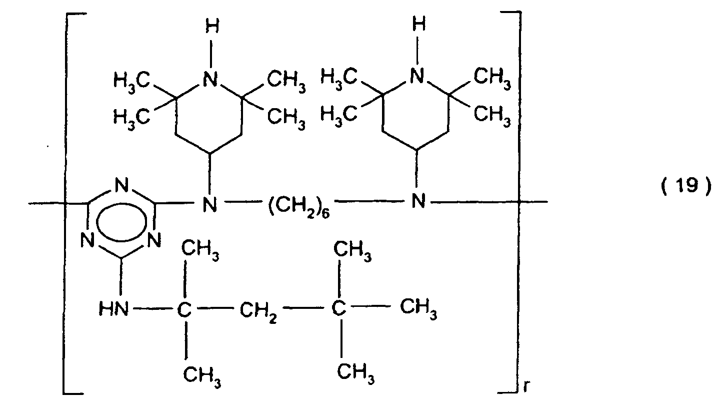 die Umsetzungsprodukte Uₓ von 2-Chlor-4,6-di-(4-n-butylamino-1,2,2,6,6-pentamethylpiperidyl)-1,3,5-triazin mit ein- oder mehrwertigen Aminen, wobei zwischen einem und allen aktiven H-Atomen am Amin ersetzt werden, wie mit Ethylendiamin, Diethylentriamin, Triethylentetramin, Hexamethylendiamin, 1,2-Bis-(3-aminopropylamino)äthan,
die Verbindungen der Formeln (20) bis (23) 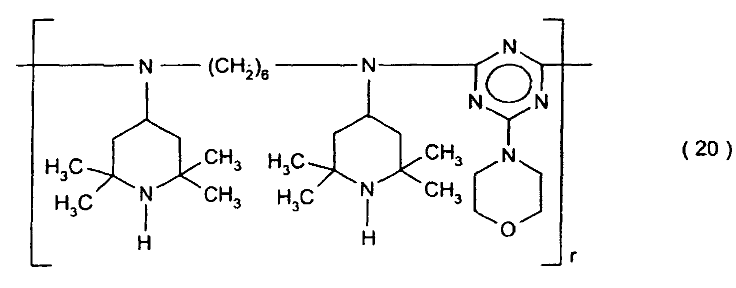 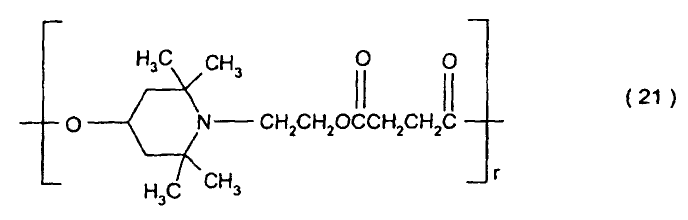 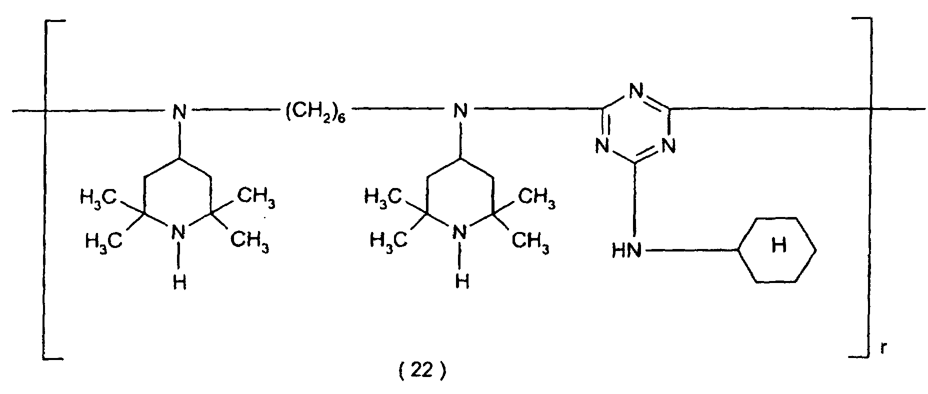 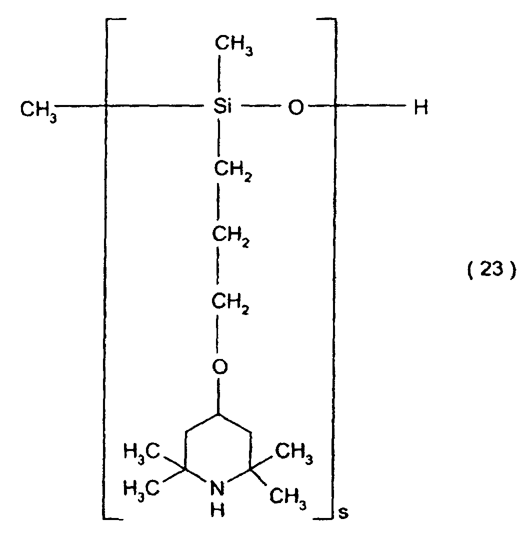 ein Produkt U5 erhältlich durch Umsetzung eines durch Reaktion eines Polyamins der Formel U5a:
H₂N-(CH₂)₃-NH-(CH₂)₂-NH-(CH₂)₃-NH₂ (U5a)
mit Cyanursäurechlorid erhaltenen Produktes mit einer Verbindung der Formel (U5b) 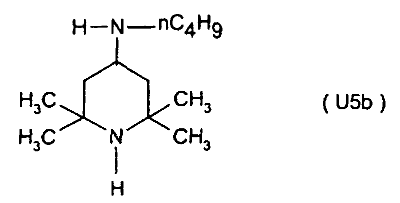 sowie mindestens eine Komponente der vorstehend beschriebenen Formeln (13) und (14).
D) 25 bis 50 Gew.-% Calcium-Stearat.

3. Verfahren gemäß Anspruch 1, **dadurch gekennzeichnet dass** die Additive sich zusammensetzen aus
A) 10 bis 40 Gew.-% an Phosphor oder Schwefel enthaltenden, Peroxid zersetzenden Verbindungen,
B) 10 bis 40 Gew.-% an phenolischen Antioxidantien,
C) 80 bis 20 Gew.-% an sterisch gehinderten Aminen, und gegebenenfalls
D) 25 bis 31 Gew.-% Calcium-Stearat.

4. Verfahren gemäß Anspruch 1, **dadurch gekennzeichnet dass** die Polyolefin-Formmasse 97,0 bis 99,95 Gew.-% eines Olefinpolymeren,
0,05 bis 3 Gew.-% an Additiven gemäß Anspruch 1 enthält.

5. Verfahren gemäss einem der Ansprüche 1 bis 4, **dadurch gekennzeichnet, daß** das Polymer Polyethylen, Polypropylen, Polyisobutylen, Polybuten-1, Polymethylpenten-1, Polyisopren, Polybutadien, ein Ethylen-Propylen-Copolymer, ein Propylen-Butadien-Copolymer, ein Isobutylen-Isopren-Copolymer, ein Ethylen-Alkylacrylat-Copolymer, ein Ethylen-Alkylmethacrylat-Copolymer, ein Ethylen-Vinylacetat-Copolymer oder ein Ethylen-Acrylsäure-Copolymer ist.

6. Verfahren gemäss einem der Ansprüche 1 bis 4, **dadurch gekennzeichnet, daß** das Polyolefin ein Homo- oder Copolymerisat des Propylens oder Polyethylens ist.

## Claims

1. A process for producing calendered polyolefin articles by plasticating a polyolefin molding composition, comprising from 95.0 to 99.97% by weight of an olefin polymer and from 0.03 to 5.0% by weight of additives, and by drawing it out in the plastic state on a film calender, wherein the additives are composed of
A) from 1 to 48% by weight of at least one component from the group consisting of phosphorus- or sulfur-containing, peroxide-destroying compounds of the formulae (1) to (5) 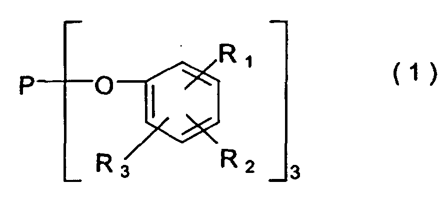 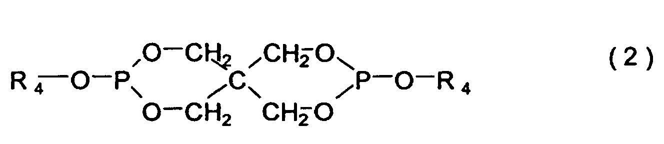
R⁵-(Sₓ)-R⁵ (3) 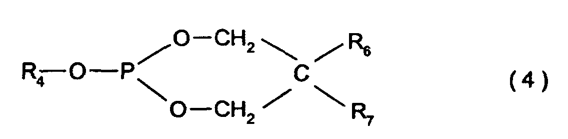 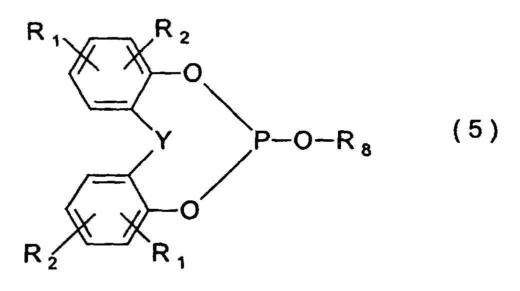
in which
R¹, R² and R³ are identical or different and are a hydrogen atom, a methyl group, a t-butyl group, a 1,1-dimethylpropyl group, a cyclohexyl group or a phenyl radical, which is unsubstituted or substituted by R¹ to R³ as defined above, with the exception of a further phenyl radical,
R⁴ is a C₈-C₂₂-alkyl group or a radical of the formula (6) 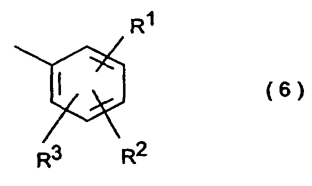 in which R¹ to R³ are as defined above or are 2-phenyl-2,2-dimethylethyl groups,
R⁵ is a C₈-C₂₀-alkyl group, and x is an integer from 1 to 5, or R⁵ is C₈₋C₂₀-O(O)C-CH₂-CH₂- ,
R⁶ and R⁷ may be identical or different and are a hydrogen atom, a methyl group, an ethyl group, an n-butyl group, a t-butyl group or a propyl group,
R⁸ is a halogen atom, a branched or unbranched C₁-C₁₀-alkyl group, a trivalent group of the formula
N-(-CH₂-CH₂-)₃-
where each valence is occupied by the formula (5), giving the structure N-[CH₂-CH₂-O-P- radical of the formula (5)]₃;
Y is a direct bond, a methylene group or an alkyl-substituted alkylene bridge having a total of 4 carbon atoms;
a compound of the formula (7) 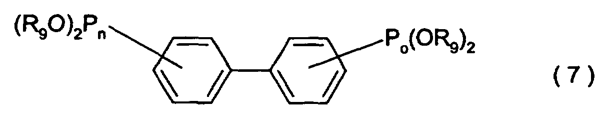 where the sum of n and o is 1 or 2, and R⁹ is a radical of the formula (6),
and
B) from 1 to 48% by weight of at least one component from the group consisting of phenolic antioxidants, consisting of glycol 3,3-bis(3'-tert-butyl-4'-hydroxyphenyl)butyrate, tetrakismethylene(3,5-di-tert-butyl-4-hydroxycinamate)methane, octadecyl 3,5-di-tert-butyl-4-hydroxycinamate, 1,3,5-trimethyl-2,4,6-tris(3,5-di-tert-butyl-4-hydroxybenzyl)benzene, 1,3,5-tris(3,5-di-tert-butyl-4-hydroxybenzyl) isocyanurate, 2,4,6-tris(3,5-di-tert-butyl-4-hydroxybenzyl) isocyanurate, 1,1,3-tris(2'-methyl-4'-hydroxy-5'-tert-butylphenyl)butane, 3,9-bis[1,1,-dimethyl-2-(di-tert-butyl-4-hydroxy-5-methylphenyl)propionyloxy)ethyl]-2,4,8,10-tetraoxospiro[5.5]undecane, α-tocopherol, including its isomer mixtures, and of the formula (8) 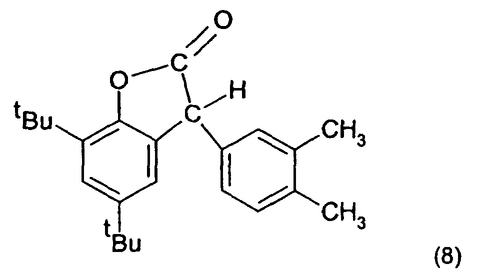 and
C) from 4 to 98% by weight of at least one component from the group consisting of sterically hindered amines with the following names or formulae, consisting of the compound (9) 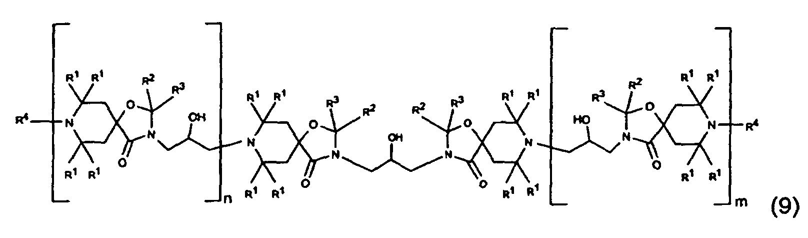 in which
n and m independently of one another, are a number from 0 to 100, where n and m cannot simultaneously be 0,
R¹ is hydrogen or a C₁-C₁₂ -alkyl group,
R² and R³ independently of one another, are a hydrogen atom, a C₁-C₁₈-alkyl group or, together with the carbon atom connecting them, form a ring having 5 to 13 members, or, together with the carbon atom connecting them, form a group of the formula (10) 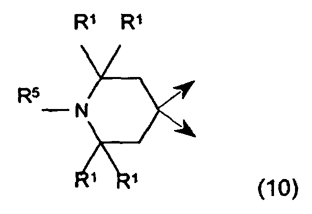 where
R⁴ in the formula (9) and R⁵ in the formula (10), independently of one another, are either hydrogen or a C₁-C₂₂-alkyl group, an oxygen radical O*, -OH, -NO, -CH₂CN, benzyl, allyl, a C₁-C₃₀-alkoxy group, a C₅-C₁₂-cycloalkoxy group, a C₆-C₁₀-aryloxy group, where the aryl radical may additionally be substituted, a C₇-C₂₀-arylalkoxy group, where the aryl radical may additionally be substituted, a C₃-C₁₀-alkenyl group, a C₃-C₆-alkynyl group, a C₁-C₁₀-acyl group, halogen, or C₇-C₉-phenylalkyl which is unsubstituted or substituted on the phenyl ring by C₁-C₄;
the compound (11) 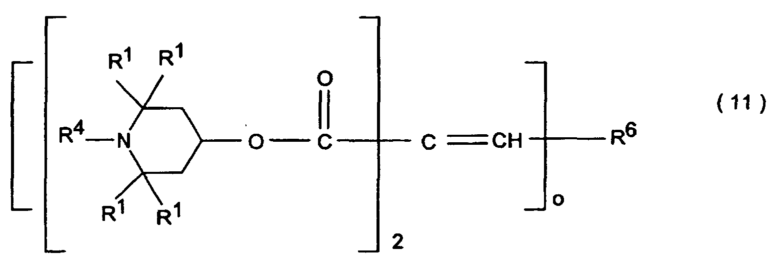 in which R¹ and R⁴ are as defined under the formula (9),
R⁶ is a substituted or unsubstituted aromatic ring, and
o is 1 or 2;
the compound (12) 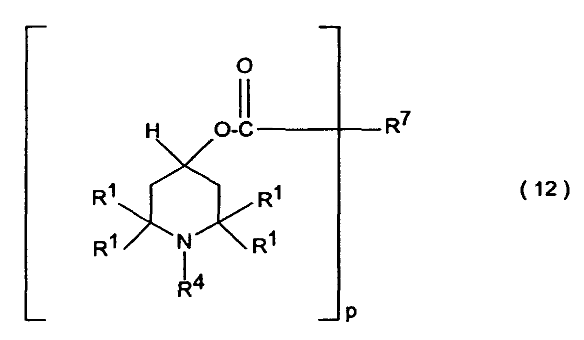 in which R¹ and R⁴ are as defined under the formula (9),
R⁷ is C₁-C₁₈-alkylene, C₂-C₁₈-oxaalkylene, C₂-C₁₈-thiaalkylene, C₂-C₁₈-azaalkylene or C₂-C₈-alkenylene; an n-valent aliphatic radical having 1 to 18 carbon atoms; R³ as C₁-C₁₈-alkylene is branched or in particular straight-chain alkylene,
p is a number from 1 to 10;
the compounds
5,11-bis(2,2,6,6-tetramethyl-4-piperidinyl)-3,5,7,9,11,13-hexaazatetracyclo-[7.4.0.0^{2,7}.1^{3,13}]-tetradecane-8,14-dione; 2,2,4,4-tetra-methyl-20-(oxiranylmethyl)-7-oxa-3,20-diazadispiro[5.1.11.2]-hene-icosan-21-one;
dodecyl 2,2,4,4-tetramethyl-7-oxa-21-oxo-3,20-diazadispiro-[5.1.11.2]heneicosane-3-propanoate and tetradecyl 2,2,4,4-tetramethyl-7-oxa-21-oxo-3,20-diazadispiro-[5.1.11.2]-heneicosane-3-propanoate;
at least one component of the formula (13) or (14) 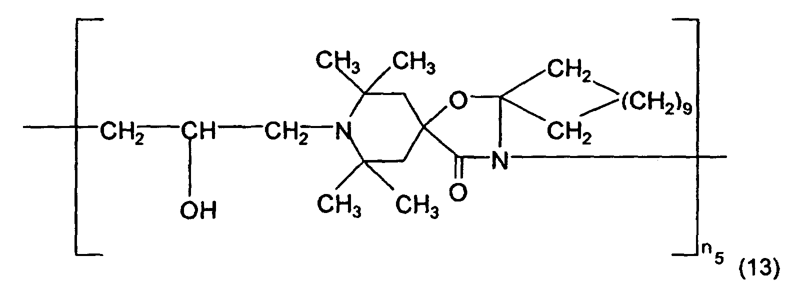 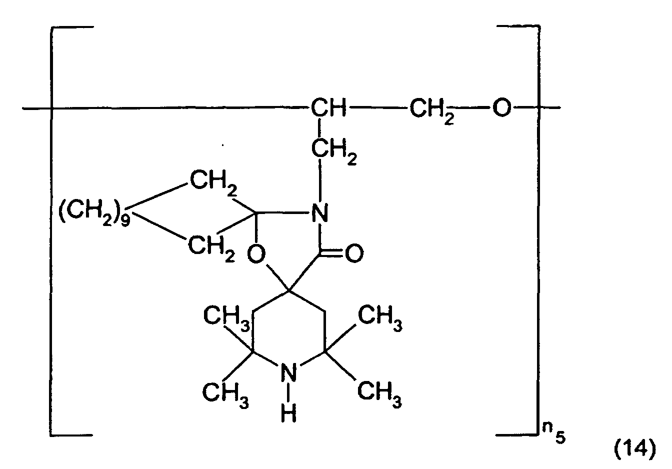 in which n₅, independently of one another, are an integer from 2-30;
the reaction product U1 of epichlorohydrin and 2,2,4,4-tetramethyl-20-(oxiranylmethyl)-7-oxa-3,20-diazadispiro[5.1.11.2]heneicosan-21-one;
a mixture M comprising the compound (9) described above in a proportion of 60-95% by weight, the compound (15) in a proportion of 4-30% by weight, and the compound (16) in a proportion of 1-10% by weight, 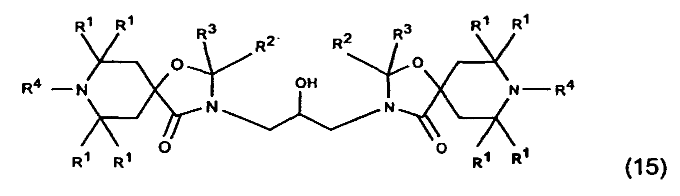 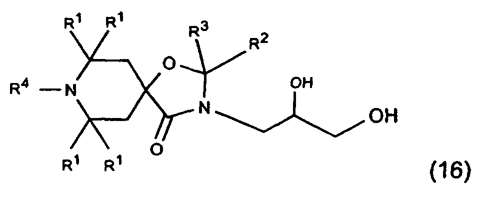 in which the substituents are as defined under the compound (9),
a compound U2 which is a product of the condensation of 1-hydroxyethyl-2,2,6,6-tetramethyl-4-hydroxypiperidine and succinic acid;
a product U3 obtainable by reacting a product obtained by reaction of a polyamine of the formula U3a with cyanuric chloride, with a compound of the formula U3b
H₂N―(CH₂)_{n_{5'}}―NH―(CH₂)_{n_{5"}}―NH―(CH₂)_{n_{5'''}}―NH₂ (U3a) 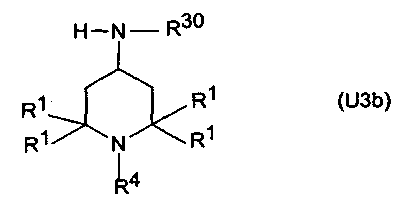
where
R¹ and R⁴ are as defined under the formula (9),
n_{5'}, n_{5"} and n_{5'''} independently of one another, are a number from 2 to 12;
R³⁰ is hydrogen, C₁-C₁₂-alkyl, C₅-C₁₂-cycloalkyl, phenyl or C₇-C₉-phenylalkyl; where U3 is a compound of the formula U3-1, U3-2 or U3-3 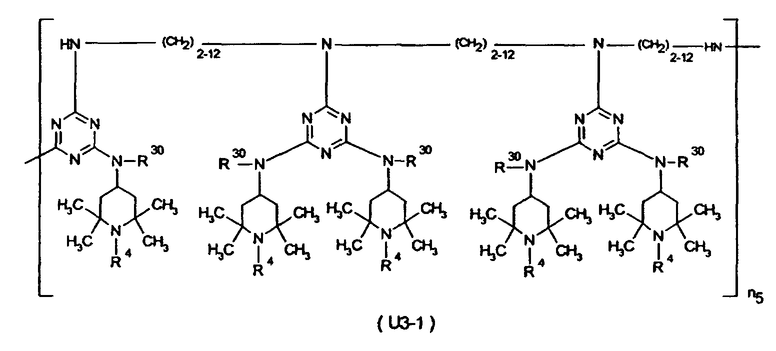 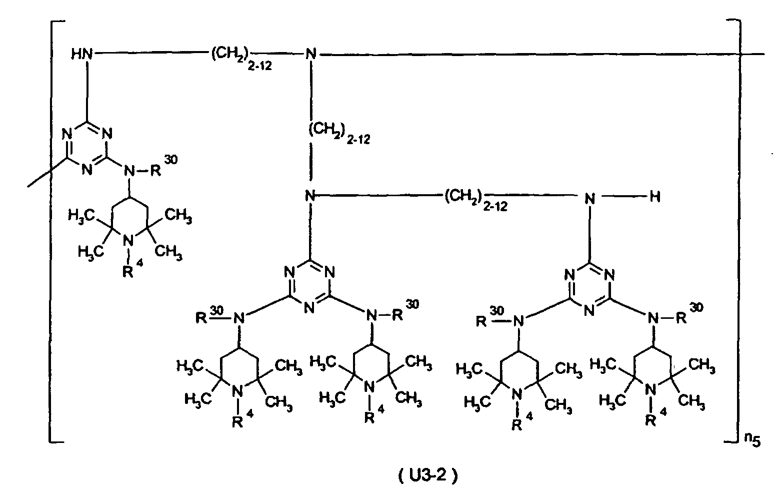 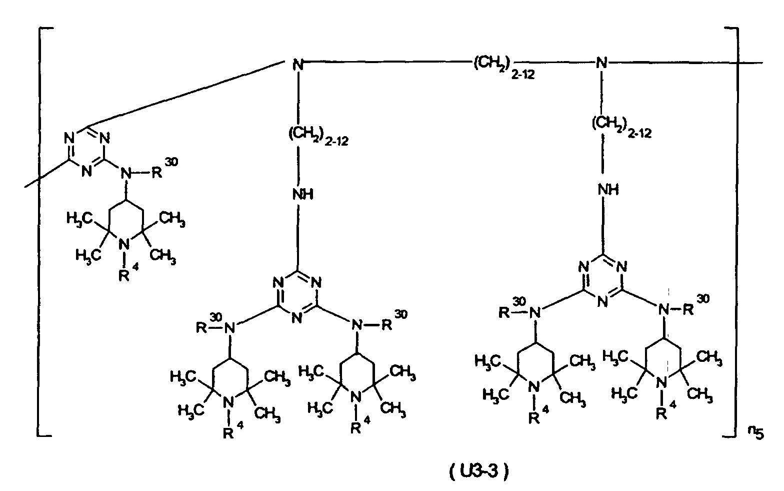
or a mixture thereof in which
n₅ is from 1 to 20, and
R⁴ and R³⁰ are as defined under the compound (9) or under the compound U3b;
a compound (17) 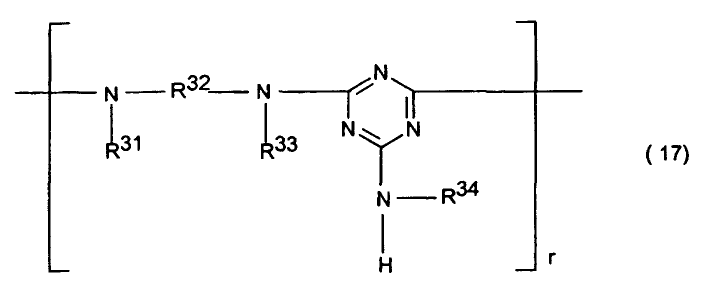 where
r is a number from 2 to 50,
R³¹, R³³ and R³⁴ independently of one another, are hydrogen, C₁-C₁₂-alkyl, C₅-C₁₂-cycloalkyl, C₅-C₁₂-cycloalkyl which is substituted by C₁-C₄-alkyl, phenyl, phenyl which is substituted by -OH and/or C₁-C₁₀-alkyl, C₇-C₉-phenylalkyl, C₇-C₉-phenylalkyl which is subsituted on the phenyl radical by -OH and/or C₁-C₁₀-alkyl, or a group of the formula 17a 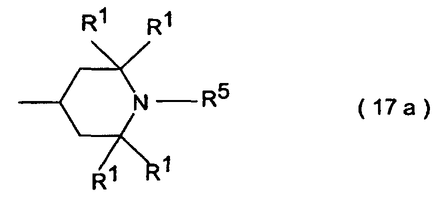 where
R¹ and R⁵ are as defined under the compound (9) or under the compound (10), and
R³¹ and R³³ independently of one another, are additionally hydrogen,
R³² is C₂-C₁₈-alkylene, C₅-C₇-cycloalkylene or C₁-C₄-alkylenedi(C₅-C₇-cyloalkylene), or the radicals R³¹, R³² and R³³, together with the nitrogen atoms to which they are bonded, form a 5- to 10-membered heterocyclic ring, and where at least one of the radicals R³¹ , R³³ and R³⁴ is a group of the formula 17a;
a compound (18) 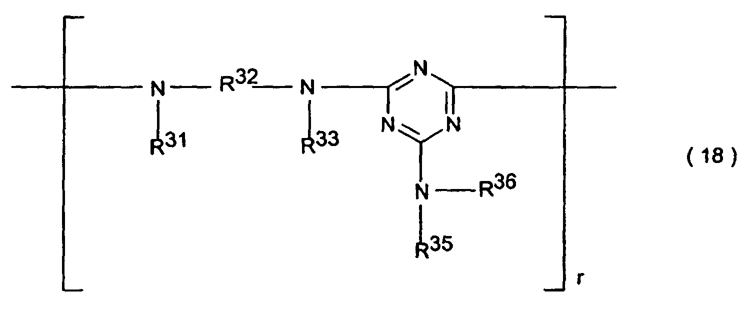 in which
R³¹ , R³² , R³³ and r are as defined above,
R³⁵ and R³⁶ independently of one another, are as defined for R³⁴, or R³⁵ and R³⁶, together with the nitrogen atom to which they are bonded, form a 5- to 10-membered heterocyclic ring, which may, in addition to the nitrogen heteroatom, also contain one or more heteroatoms, preferably an oxygen atom, and at least one of the radicals R³¹, R³³, R³⁵ and/or R³⁶ is a group of the formula (17a);
a compound (19) 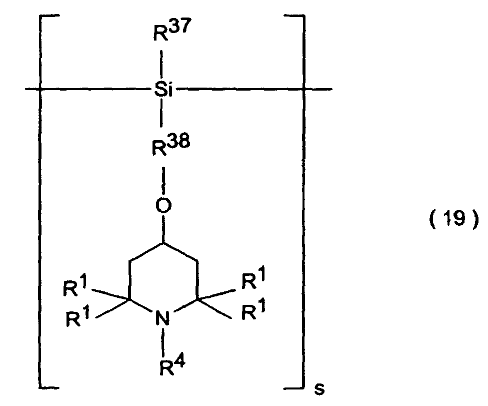 where R¹ and R⁴ are as defined under the formula (9), and s is a number from 1 to 50,
R³⁷ is C₁-C₁₀-alkyl, C₅-C₁₂-cycloalkyl, C₅-C₁₂-cycloalkyl which is substituted by C₁-C₄-alkyl, phenyl or phenyl which is substituted by C₁-C₁₀-alkyl,
R³⁸ is C₃-C₁₀-alkylene;
a product U4 obtainable by reacting a polyamine of the formula U3a described above with a compound of the formula U4a: 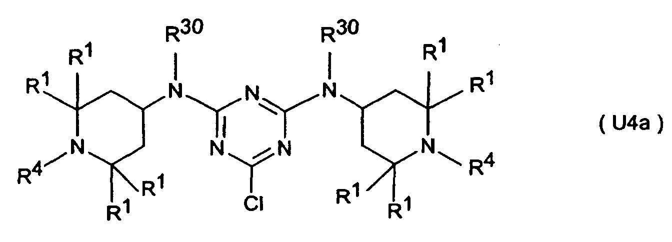 where the radicals R¹, R⁴ and R³⁰ are as defined under the compound (9) or under the compound U3b;
and
D) from 25 to 50% by weight of an alkaline earth metal stearate Z.

2. A process wherein the additives are composed of as claimed in claim 1,
A) from 1 to 48% by weight of at least one of the following compounds: tris(2,4-di-tert-butylphenyl) phosphite, distearyl pentaerythrityl diphosphite, bis(2,4-di-tert-butylphenyl) pentaerythrityl diphosphite, 5-butyl-5-ethyl-2-[2,4,6-tri-tert-butylphenoxy]-1,3,2-dioxaphospho-rinane, 2,2',2"-nitrilo[triethyltris(3,3',5,5'-tetra-tert-butyl-1,1'-biphenyl-2,2'-diyl) phosphite], tetrakis(2,4-di-tert-butyl) 4,4'-dipheny-lidenediphosphite and its positional isomers or a mixture thereof, and bis(2,4-dicumylphenyl) pentaerithrityl diphosphite;
B) from 1 to 48% by weight of at least one of the following compounds: glycol 3,3-bis-(3'-tert-butyl-4'-hydroxyphenyl)butyrate, tetrakismethylene(3,5-di-tert-butyl-4-hydroxycinamate)methane, octadecyl 3,5-di-tert-butyl-4-hydroxycinamate, α-tocopherol or a mixture of its isomers, 1,3,5-trimethyl-2,4,6-tris(3,5-di-tert-butyl-4-hydroxybenzyl)benzene, 1,3,5-tris(3,5-di-tert-butyl-4-hydroxybenzyl) isocyanurate, 2,4,6-tris(3,5-di-tert-butyl-4-hydroxybenzyl) isocyanurate or a compound of the formula (8) described above;
C) from 4 to 98% by weight of at least one of the following compounds: the mixture M described above, 2,2,4,4-tetramethyl-20-(oxiranylmethyl)-7-oxa-3,20-diazadispiro[5.1.11.2]heneicosan-21- one; dodecyl 2,2,4,4-tetramethyl-7-oxa-21-oxo-3,20-diazadispiro-[5.1.11.2]heneicosane-3-propanoate and tetradecyl 2,2,4,4-tetramethyl-7-oxa-21-oxo-3,20-diazadispiro-[5.1.11.2]heneicosan-3-pro-panoate, bis(2,2,6,6-tetramethylpiperidin-4-yl) sebacate, bis(2,2,6,6-tetramethyl-4-piperidinyl) [(4-methoxyphenyl)methylene]propane-dioate, bis(1-octyloxy-2,2,6,6-tetramethylpiperidyl) sebacate, N,N'-diformyl-N,N'-bis(2,2,6,6-tetramethyl-4-piperidinyl)hexamethylene-diamine, the above-described reaction product U1 of epichlorohydrin, the compounds of the formulae (9), (13) and (14) described above,
a compound (19) 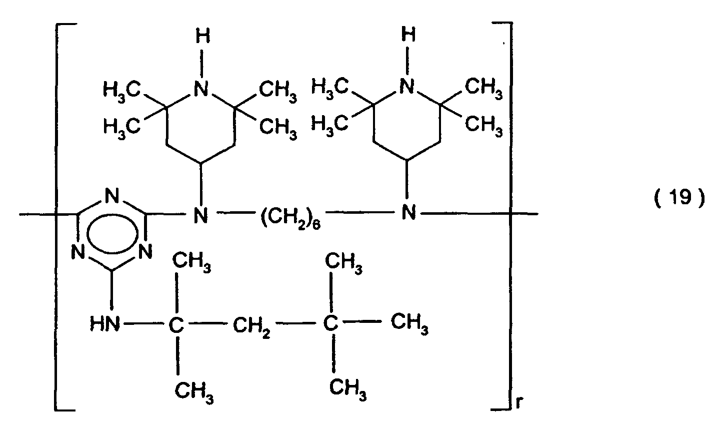 the reaction products Uₓ of 2-chloro-4,6-di(4-n-butylamino-1,2,2,6,6-pentamethyl-piperidyl)-1,3,5-triazine with mono- or polyamines in which between one and all of the active H atoms on the amine have been replaced, such as with ethylendi-amine, diethylenetriamine, triethylenetetramine, hexamethylenediamine or 1,2-bis-(3-aminopropylamino)ethane,
the compounds of the formulae (20) to (23) 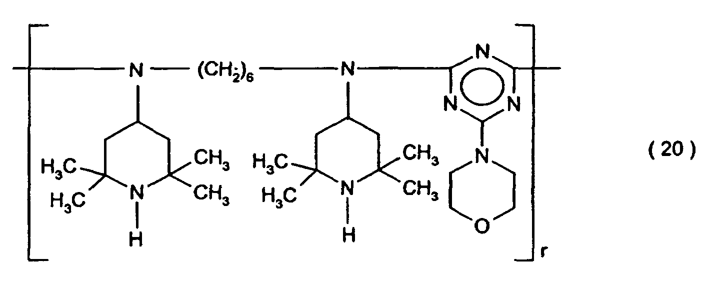 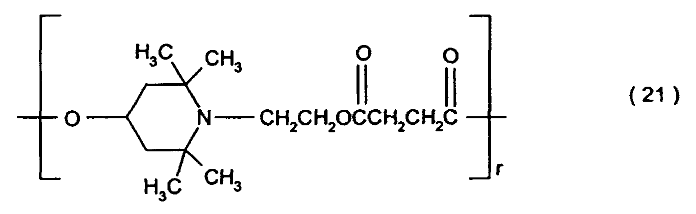 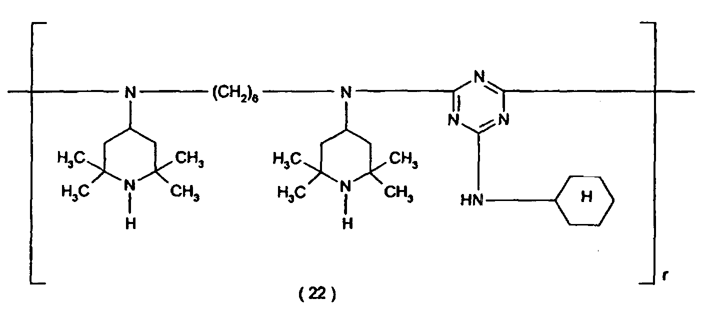 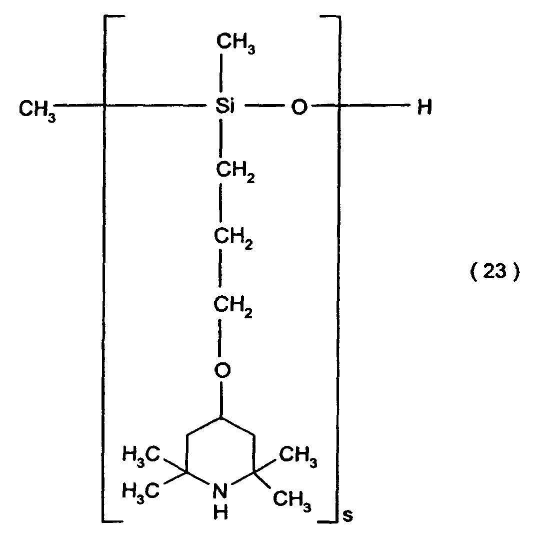 a product U5 obtainable by reacting a product obtained by reaction of a poly-amine of the formula U5a:
H₂N-(CH₂)₃-NH-(CH₂)₂-NH-(CH₂)₃-NH₂ (U5a)
with cyanuric chloride, with a compound of the formula (U5b) 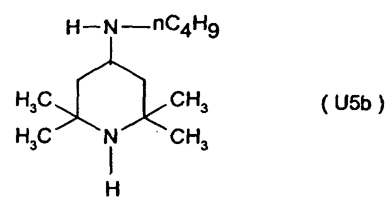 and at least one component of the formulae (13) and (14) described above,
D) from 25 to 50% by weight of calcium stearate.

3. A process wherein the additives are composed of as claimed in claim 1,
A) from 10 to 40% by weight of phosphorus- or sulfur-containing, peroxide-destroying compounds,
B) from 10 to 40% by weight of phenolic antioxidants,
C) from 80 to 20% by weight of sterically hindered amines, and, if desired
D) from 25 to 31% by weight of calcium stearate.

4. A process as claimed in claim 1, wherein the polyolefin molding composition comprises
from 97.0 to 99.95% by weight of an olefin polymer,
from 0.05 to 3% by weight of additives as claimed in claim 1.

5. A process as claimed in one of claims 1 to 4, wherein the polymer is polyethylene, polypropylene, polyisobutylene, poly-1-butene, polymethyl-1-pentene, polyisoprene, polybutadiene, an ethylene-propylene copolymer, a propylene-butadiene copolymer, an isobutylene-isoprene copolymer, an ethylene-alkyl acrylate copolymer, an ethylene-alkyl methacrylate copolymer, an ethylene-vinyl acetate copolymer or an ethylene-acrylic acid copolymer.

6. A process as claimed in one of claims 1 to 4, wherein the polyolefin is a homopolymer or copolymer of propylene or polyethylene.

## Revendications

1. Procédé de préparation d'objets calandrés en polyoléfine par plastification d'une pâte de moulage de polyoléfine qui contient de 95,0 à 99,97% en poids d'un polymère d'oléfine et de 0,03 à 5,0% en poids d'additifs, et par étirage à l'état plastique sur une calandreuse de feuilles, **caractérisé en ce que** les additifs sont constitués :
A) de 1 à 48% en poids d'au moins un composant du groupe des composés des formules (1) à (5), qui contiennent du phosphore ou du soufre et qui se décomposent en présence de peroxydes: 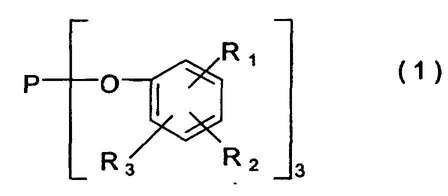 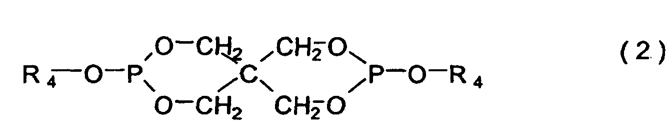
R⁵-(Sₓ)-R⁵ (3) 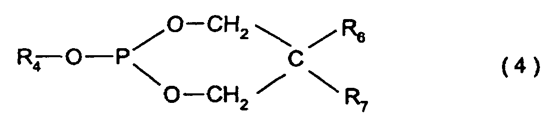 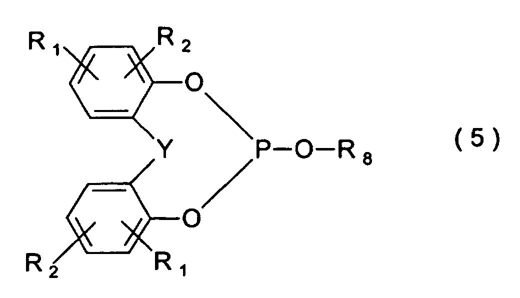
dans lesquelles
R¹, R² et R³ sont identiques ou différents et représentent un atome d'hydrogène, un groupe méthyle, un groupe t-butyle, un groupe 1,1-diméthylpropyle, un groupe cyclohexyle ou un radical phényle qui est éventuellement substitué avec R' à R³ dont la définition est donnée ci-dessus, à l'exclusion d'un autre radical phényle,
R⁴ représente un groupe alkyle en C₈ à C₂₂ ou un radical de formule (6): 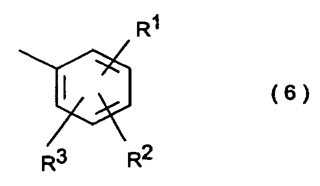 dans laquelle R¹ à R³ ont la signification donnée plus haut ou peuvent être des groupes 2-phényl-2,2-diméthyléthyle,
R⁵ représente un groupe alkyle en C₈ à C₂₀ et x représente un nombre entier de 1 à 5, ou R⁵ peut représenter (C₈ à C₂₀)-O(O)C-CH₂-CH₂-,
R⁶ et R⁷ peuvent être identiques ou différents et peuvent représenter un atome d'hydrogène, un groupe méthyle, un groupe éthyle, un groupe n-butyle, un groupe t-butyle ou un groupe propyle,
R⁸ représente un atome d'halogène, un groupe alkyle linéaire ou ramifié en C₁ à C₁₀, un groupe trivalent de formule:
N-(-CH₂-CH₂-)₃-
dans laquelle chaque valence est occupée par la formule (5), de sorte que l'on obtient la structure N-[CH₂-CH₂-O-P-radical de formule (5)]₃;
Y représente une liaison simple, un groupe méthylène ou un pont alkylène substitué par alkyle et comptant en tout 4 atomes de C,
un composé de formule (7) 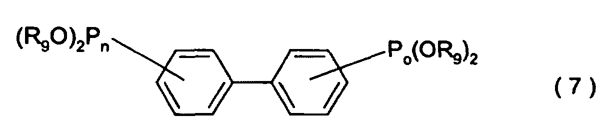 dans laquelle la somme de n et o peut représenter 1 ou 2 et
R⁹ représente un radical de formule (6),
et
B) de 1 à 48% en poids d'au moins un composant du groupe des antioxydants phénoliques constitué du glycolester d'acide 3,3-bis-(3'-tert-butyl-4'-hydroxyphényl)-butyrique, du tétrakisméthylène-(3,5-di-tert-butyl-4-hydroxyzinamate)méthane, du 4-hydroxyzinamate d'octadécyl-3,5-di-tert-butyle, du 1,3,5-triméthyl-2,4,6-tris(3,5-di-tert-butyl-4-hydroxybenzyl)benzène, de l'isocyanurate de 1,3,5-tris(3,5-di-tert-butyl-4-hydroxybenzyle), de l'isocyanurate de 2,4,6-tris(3,5-di-tert-butyl-4-hydroxybenzyle), du 1,1,3-tris(2'-méthyl-4'-hydroxy-5'-tert-butylphényl)butane, du 3,9-bis[1,1-diméthyl-2-(di-tert-butyl-4)hydroxy-5-méthylphényl)propionyloxy)éthyl]-2,4,8,10-tétra-oxospiro[5.5]undécane, de l'α-tocophérol, y compris son mélange d'isomères et un groupe de formule (8) 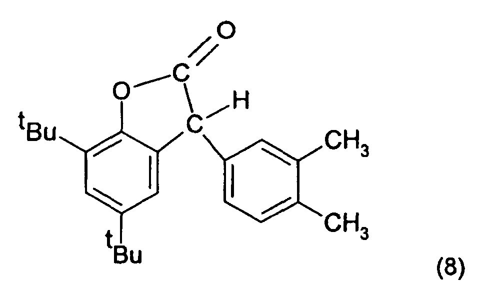 et
C) de 4 à 98% en poids d'au moins un composant du groupe des amines à encombrement stérique qui ont les noms ou formules décrits ci-dessous, constituées du composé (9) 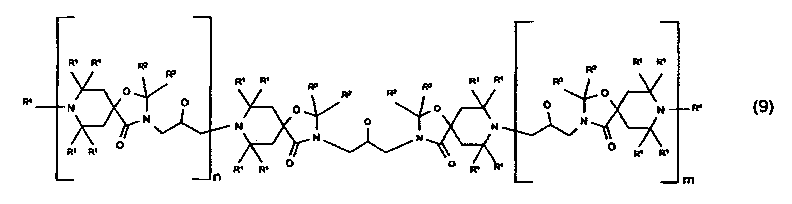 dans lequel
n et m représentent indépendamment l'un de l'autre un nombre de 0 à 100, n et m ne pouvant représenter 0 simultanément,
R¹ représente l'hydrogène ou un groupe alkyle en C₁ à C₁₂,
R² à R³ représentent indépendamment l'un de l'autre un atome d'hydrogène, un groupe alkyle en C₁ à C₁₈ ou, avec l'atome de C qui les relie, un cycle de 5 à 13 chaînons ou, avec ratome de C qui les lie, un groupe de formule (10), 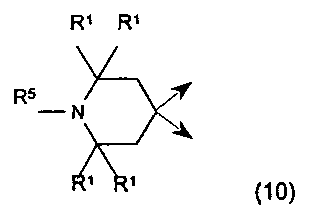 dans laquelle
R⁴ dans la formule (9) et R⁵ dans la formule (10) représentent indépendamment l'un de l'autre soit l'hydrogène soit un groupe alkyle en C₁ à C₂₂, un radical oxygène O^{*}, - OH, -NO, -CH₂CN, un groupe benzyle, un groupe allyle, un groupe alkyloxy en C₁ à C₃₀, un groupe cycloalkyloxy en C₅ à C₁₂, un radical aryloxy en C₆ à C₁₀, le radical aryle pouvant en outre être encore substitué; un groupe arylalkyloxy en C₇ à C₂₀, le radical aryle pouvant de plus être encore substitué, un groupe alcényle en C₃ à C₁₀, un groupe alcynyle en C₃ à C₆, un groupe acyle en C₁ à C₁₀, un halogène, un groupe phénylalkyle en C₇ à C₉ non substitué ou substitué par un alkyle en C₁ à C₄ sur le cycle du phényle ;
du composé (11) 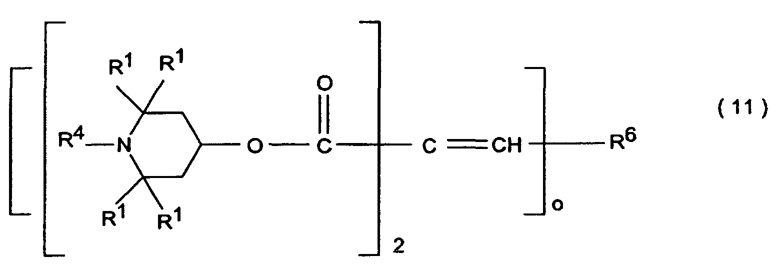 dans lequel R¹ et R⁴ ont les significations données à propos de la formule (9),
R⁶ représente un radical aromatique éventuellement substitué et
o représente 1 ou 2;
du composé (12) 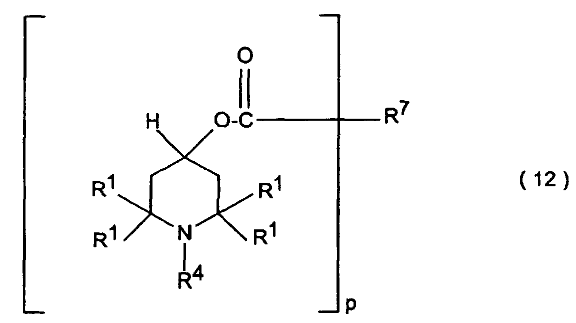 dans lequel R¹ et R⁴ ont les significations exposées à propos de la formule (9),
R⁷ représente un alkylène en C₁ à C₁₈, un oxaalkylène en C₂ à C₁₈, un thiaalkylène en C₂ à C₁₈, un azaalkylène en C₂ à C₁₈ ou un alcényle en C₂ à C₈; un radical aliphatique en C₁ à C₁₈ de valence n; R³ représente un alkylène en C₁ à C₁₈, ramifié ou en particulier un alkylène linéaire, et
p représente un nombre de 1 à 10;
des composés
5,11-bis-(2,2,6,6-tétraméthyl-4-pipéridinyl)-3,5,7,9,11,13-hexaaza-tétracyclo-[7.4.0.0^{2,7}.1^{3,13}]-tétradécane-8,14-dione;2,2,4,4-tétraméthyl-20-(oxiranylméthyl)-7-oxa-3,20-diaza-dispiro[5.1.11.2]hénéicosan-21-one;
dodécylester d'acide 2,2,4,4-tétraméthyl-7-oxa-21-oxo-3,20-diaza-dispiro-[5.1.11.2)-hénéicosan-3-propanoïque et tétradécylester d'acide 2,2,4,4-tétraméthyl-7-oxa-21-oxo-3,20-diaza-dispiro-[5.1.11.2]-hénéicosan-3-propanoïque;
au moins d'un composant de formules (13) et (14) 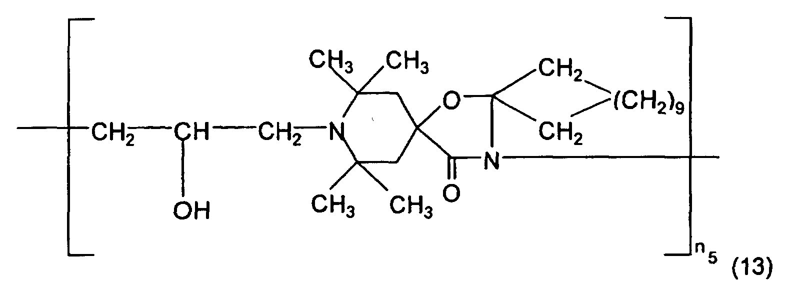 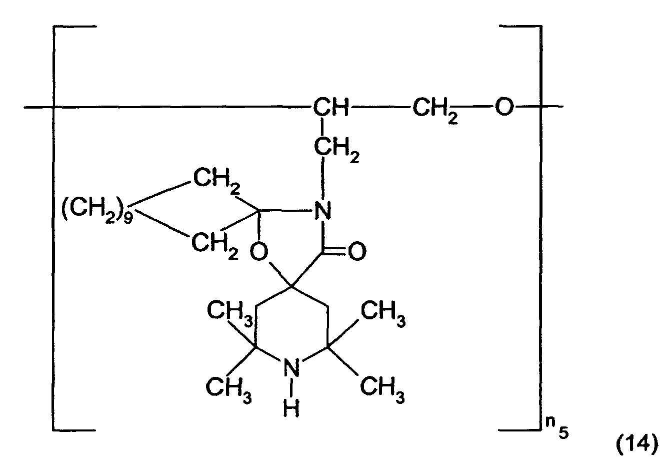 dans lesquelles n₅ représente indépendamment l'un de l'autre un nombre entier compris entre 2 et 30;
du produit de conversion U1 de l'épichlorhydrine et de la 2,2,4,4-tétraméthyl-20-(oxiranylméthyl)-7-oxa-3,20-diaza-dispiro[5.1.11.2]hénoéicosan-21-one;
d'un mélange M, qui contient le composé (9) décrit plus haut dans une proportion de 60 à 95% en poids, le composé (15) à une proportion de 4 à 30% en poids et le composé (16) à une proportion de 1 à 10% en poids, 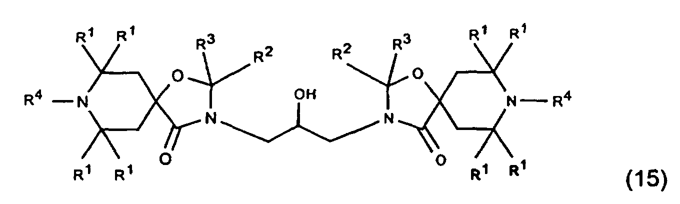 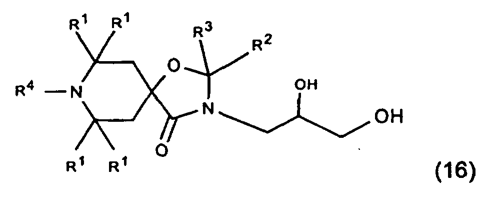 les substituants ayant les significations mentionnées à propos du composé (9),
d'un composé U2 qui représente un produit de condensation de 1-hydroxyéthyl-2,2,6,6-tétraméthyl-4-hydroxypipéridine et d'acide succinique;
d'un produit U3 que l'on obtient par conversion d'un produit obtenu par la réaction d'une polyamine de formule U3a et un chlorure d'acide cyanurique, avec un composé de formule U3b,
H₂N―(CH₂)_{n_{5'}}―NH―(CH₂)_{n_{5"}}―NH―(CH₂)_{n_{5'''}}―NH₂ (U3a) 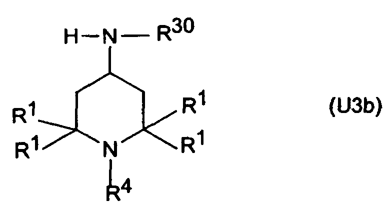
dans lesquelles
R¹ et R⁴ ont les significations données à propos de la formule (9),
n_{5'}, n_{5"} et n_{5'''} représentent indépendamment l'un de l'autre un nombre compris entre 2 et 12,
R³⁰ représente l'hydrogène, un alkyle en C₅ à C₁₂, un cycloalkyle en C₅ à C₁₂, le phényle ou un phényle(alkyle en C₇ à C₉); U3 étant un composé de formule U3-1, U3-2, U3-3: 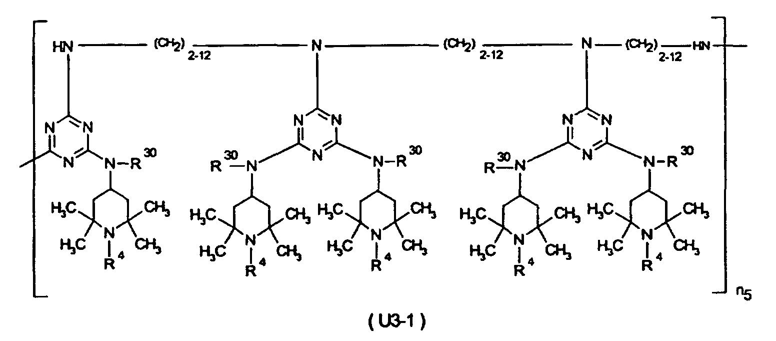 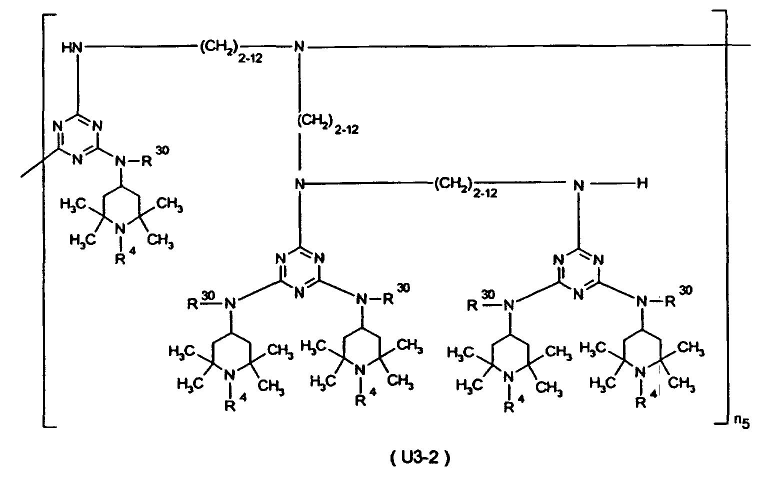 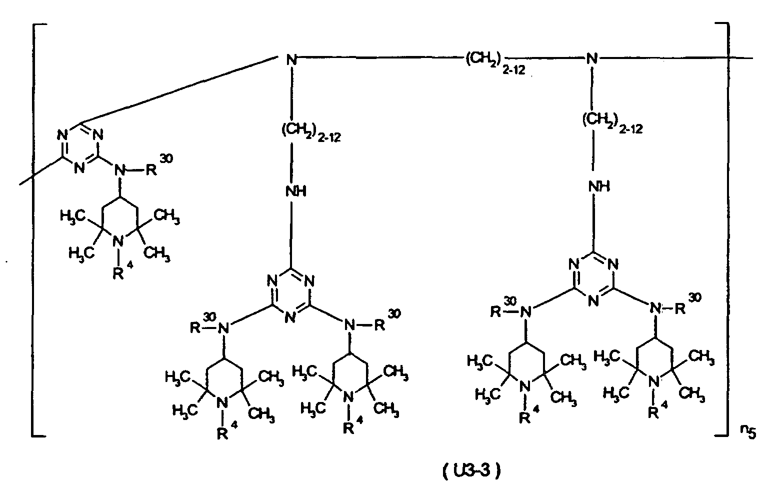
ou un mélange de ceux-ci,
n₅ représentant un nombre de 1 à 20,
R⁴ et R³⁰ ont les significations données respectivement à propos du composé (9) et du composé U3b;
d'un composé (17) 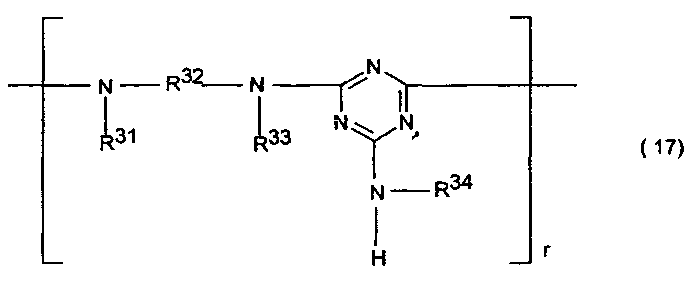 dans lequel
r représente un nombre de 2 à 50,
R³¹, R³³ et R³⁴ représentent indépendamment l'un de l'autre l'hydrogène, un alkyle en C₁ à C₁₂, un cycloalkyle en C₅ à C₁₂, un cycloalkyle en C₅ à C₁₂ substitué avec un alkyle en C₁ à C₄, le phényle, un phényle substitué par -OH et/ou un alkyle en C₁ à C₁₀, un phényle(alkyle en C₇ à C₉), un phényle(alkyle en C₇ à C₉) substitué sur le radical phényle avec -OH et/ou avec un alkyle en C₁ à C₁₀, ou un groupe de formule 17a, 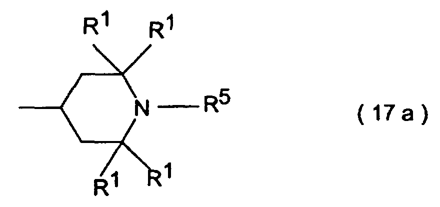 dans laquelle
R¹ et R⁵ ont les significations données respectivement à propos du composé (9) et du composé (10) et
R³¹ et R³³ représentent de plus l'hydrogène, indépendamment l'un de l'autre,
R³² représente un alkylène en C₂ à C₁₈, un cycloalkylène en C₅ à C₇ ou un (alkylène en C₁ à C₄)di(cycloalkylène en C₅ à C₇) ou les radicaux R³¹, R³² et R³³ forment avec les atomes d'azote auxquels ils sont liés un cycle hétérocyclique comptant de 5 à 10 chaînons, au moins l'un des radicaux R³¹, R³³ et R³⁴ représentant un groupe de formule 17a;
d'un composé (18) 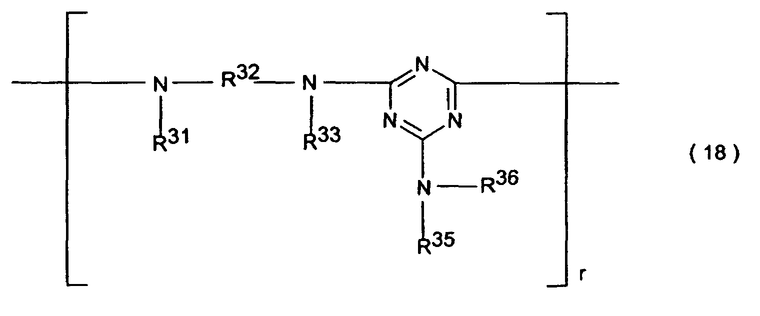 dans lequel
R³¹ , R³², R³³ et r ont les significations données plus haut,
R³⁵ et R³⁶ peuvent avoir indépendamment l'un de l'autre la définition de R³⁴, ou R³⁵ et R³⁶ forment avec l'atome d'azote auquel ils sont liés un cycle hétérocyclique de 5 à 10 chaînons, et en plus de l'hétéroatome d'azote, peuvent comprendre un ou plusieurs hétéroatomes, de préférence un atome d'oxygène, au moins l'un des radicaux R³¹, R³³, R³⁵ et/ou R³⁶ représentant un groupe de formule (17a);
d'un composé (19) 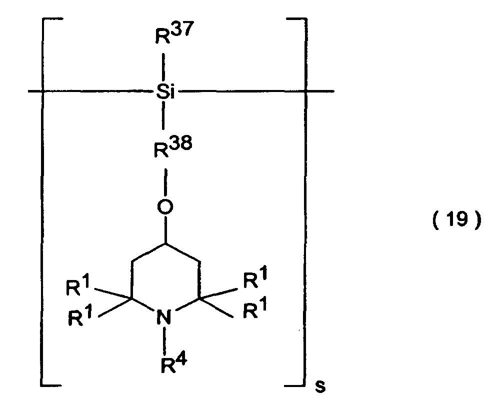 dans lequel R¹ et R⁴ ont la signification donnée à propos du composé (9) et s représente un nombre de 1 à 50,
R³⁷ représente un alkyle en C₁ à C₁₀, un cycloalkyie en C₅ à C₁₂, un cycloalkyle en C₅ à C₁₂ substitué avec un alkyle en C₁ à C₄, le phényle ou un phényle substitué avec un alkyle en C₁ à C₁₀,
R³⁸ représentant un alkylène en C₃ à C₁₀;
d'un produit U4 qui est obtenu par conversion d'une polyamine de formule U3a décrite plus haut avec une polyamine de formule U4a: 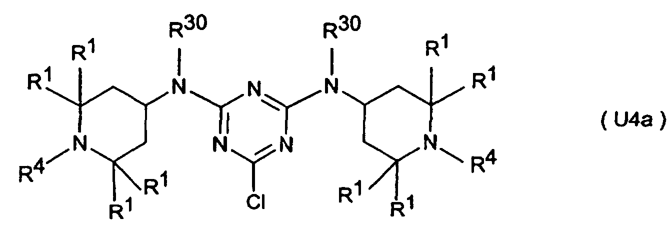 dans laquelle les radicaux R¹, R⁴ et R³⁰ ont les significations données respectivement à propos du composé (9) et du composé U3b;
et
D) de 25 à 50% en poids d'un stéarate Z d'un métal alcalino-terreux.

2. Procédé selon la revendication 1, **caractérisé en ce que** les additifs sont constitués :
A) de 1 à 48% en poids d'au moins l'un des composés suivants: le phosphite de tris-(2,4-di-tert-butylphényle), le diphosphite de distéarylpentaérythritol, le diphosphite de bis-(2,4-di-tert-butylphényl)-pentaérythritol, le 1,3,2-dioxaphosphorinan-5-butyl-5-éthyl-2-[2,4,6-tri-tert-butylphénoxyle], le 2,2',2"-nitrilo[triéthyl-tris(3,3',5,5'-tétra-tert-butyl-1,1'-biphényl-2,2'-diyl)phosphite], le diphosphite de tétrakis(2,4-di-tert-butyl)-4,4'-diphénylidène ainsi que ses isomères de position ou qu'un mélange de ceux-ci, le diphosphite de bis(2,4-dicumylphényl)pentaérythritol;
B) de 1 à 48% en poids d'au moins l'un des composés suivants: le glycolester d'acide 3,3-bis-(3'-tert-butyl-4'-hydroxyphényl)-butyrique, le tétrakisméthylène-(3,5-di-tert-butyl-4-hydroxyzinamate)méthane, l'octadécyl-3,5-di-tert-butyl-4-hydroxyzinamate, l'α-tocophérol et le mélange de ses isomères, le 1,3,5-triméthyl-2,4,6-tris(3,5-di-tert-butyl-4-hydraxybenzyl)benzène, l'isocyanurate de 1,3,5-tris(3,5-di-tert-butyl-4-hydroxybenzyl), l'isocyanurate de 2,4,6-tris(3,5-di-tert-butyl-4-hydroxybenzyle) ou un composé de formule (8) décrite plus haut;
C) de 4 à 98% en poids d'au moins l'un des composés suivants: le mélange M décrit plus haut, la 2,2,4,4-tétraméthyl-20-(oxiranylméthyl)-7-oxa-3,20-diaza-dispiro-[5.1.11.2]hénéicosan-21-one; le dodécylester d'acide 2,2,4,4-tétraméthyl-7-oxa-21-oxo-3,20-diaza-dispiro-[5.1.11.2]-hénéicosan-3-propanoïque et le tétradécylester d'acide 2,2,4,4-tétraméthyl-7-oxa-21-oxo-3,20-diaza-dispiro-[5.1.11.2]-hénéicosan-3-propanoïque; le sébacate de bis-(2,2,6,6-tétraméthylpipéridin-4-yle), le bis-2,2,6,6-tétraméthyl-4-pipéridinyl)ester d'acide [(4-méthoxyphényl)-méthylène]-propanoïque, le sébacate de bis-(1-octyloxy-2,2,6,6-tétraméthylpipéridyle), la N,N'-diformyl-N,N'-bis-(2,2,6,6-tétraméthyl-4-pipéridinyl)-hexaméthylène diamine, le produit de réaction U1 d'épichlorhydrine décrit plus haut, les composés décrits plus haut de formules (9), (13) et (14),
un composé (19) 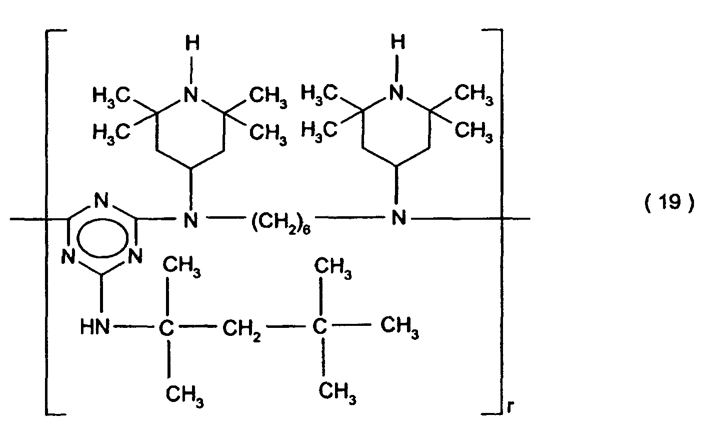 les produits de réaction Uₓ de 2-chloro-4,6-di-(4-n-butylamino-1,2,2,6,6-pentaméthylpipéridyl)-1,3,5-triazine avec des amines monovalentes ou polyvalentes, entre un et tous les atomes de H actifs de l'amine étant remplacés, comme l'éthylènediamine, la diéthylènetriamine, la triéthylènetétramine, l'hexaméthylènediamine, le 1,2-bis-(3-aminopropylamino)éthane,
les composés de formules (20) à (23) 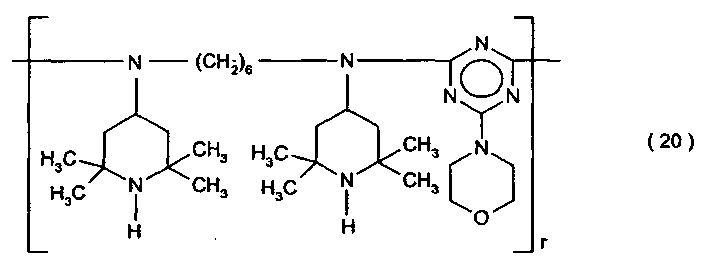 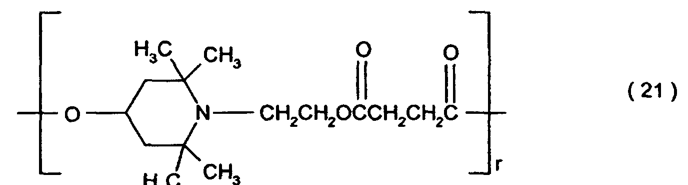 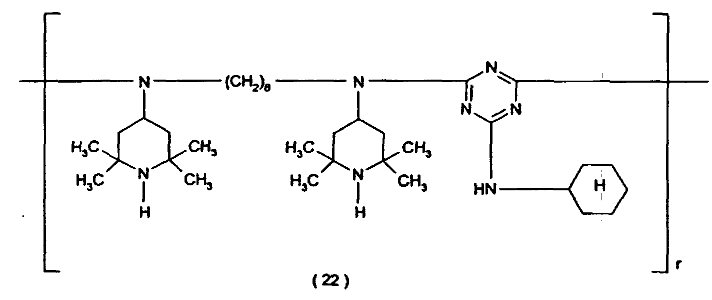 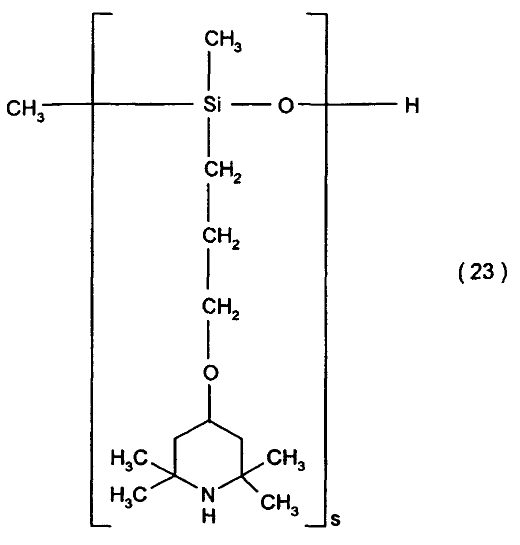 un produit U5 obtenu par conversion d'un produit obtenu par réaction d'une polyamine de formule U5a:
H₂N-(CH₂)₃-NH-(CH₂)₂-NH-(CH₂)₃-NH₂ (U5a)
avec un chlorure d'acide cyanurique, avec un composé de formule (U5b) 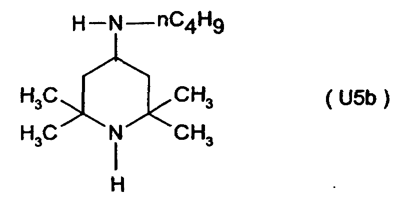 ainsi qu'au moins un composé des formules (13) et (14) décrites plus haut
D) de 25 à 50% en poids de stéarate de calcium.

3. Procédé selon la revendication 1, **caractérisé en ce que** les additifs sont constitués de:
A) 10 à 40% en poids de composés contenant du phosphore ou du soufre et qui se décomposent en présence de peroxyde,
B) 10 à 40% en poids d'antioxydants phénoliques,
C) 80 à 20% en poids d'amines à encombrement stérique et éventuellement
D) 25 à 31% en poids de stéarate de calcium.

4. Procédé selon la revendication 1, **caractérisé en ce que** la pâte de moulage en polyoléfine contient
de 97,0% à 99,95% en poids d'un polymère oléfinique, et
de 0,05% à 3% en poids en additifs selon la revendication 1.

5. Procédé selon l'une quelconque des revendications 1 à 4, **caractérisé en ce que** le polymère est le polyéthylène, le polypropylène, le polyisobutylène, le polybutène-1, le polyméthylpentène-1, le polyisoprène, le polybutadiène, un copolymère d'éthylène et de propylène, un copolymère de propylène et de butadiène, un copolymère d'isobutylène et d'isoprène, un copolymère d'éthylène et d'acrylate d'alkyle, un copolymère d'éthylène et de méthacrylate d'alkyle, un copolymère d'éthylène et d'acétate de vinyle ou un copolymère d'éthylène et d'acide acrylique.

6. Procédé selon l'une quelconque des revendications 1 à 4, **caractérisé en ce que** la polyoléfine est un homo ou un copolymère de propylène ou de polyéthylène.
